(19) Europäisches Patentamt / European Patent Office / Office européen des brevets

(11) **EP 3 316 359 B1**

(12) **EUROPEAN PATENT SPECIFICATION**

(45) Date of publication and mention of the grant of the patent:
**02.06.2021 Bulletin 2021/22**

(21) Application number: **16813962.4**

(22) Date of filing: **22.06.2016**

(51) Int Cl.:
*H01M 4/62* (2006.01)    *C08K 3/04* (2006.01)
*C08L 33/08* (2006.01)    *H01G 11/38* (2013.01)
*H01G 11/86* (2013.01)    *H01M 4/13* (2010.01)
*H01M 4/139* (2010.01)    *H01G 11/06* (2013.01)
*H01M 10/0525* (2010.01)    *H01M 4/1391* (2010.01)
*H01M 4/1393* (2010.01)

(86) International application number:
**PCT/JP2016/003022**

(87) International publication number:
**WO 2016/208190 (29.12.2016 Gazette 2016/52)**

(54) **COMPOSITION FOR ELECTROCHEMICAL DEVICE ELECTRODE, ELECTRODE FOR ELECTROCHEMICAL DEVICE, ELECTROCHEMICAL DEVICE, AND METHOD OF PRODUCING COMPOSITION FOR ELECTROCHEMICAL DEVICE ELECTRODE**

ZUSAMMENSETZUNG FÜR EINE ELEKTRODE EINER ELEKTROCHEMISCHEN VORRICHTUNG, ELEKTRODE FÜR EINE ELEKTROCHEMISCHE VORRICHTUNG, ELEKTROCHEMISCHE VORRICHTUNG, UND METHODE ZUR HERSTELLUNG EINER ZUSAMMENSETZUNG FÜR EINE ELEKTRODE EINER ELEKTROCHEMISCHEN VORRICHTUNG

COMPOSITION D'ÉLECTRODE D'UN DISPOSITIF ÉLECTROCHIMIQUE, ÉLECTRODE POUR UN DISPOSITIF ÉLECTROCHIMIQUE, DISPOSITIF ÉLECTROCHIMIQUE, ET PROCÉDÉ DE PRODUCTION DE COMPOSITION D'ÉLECTRODE D'UN DISPOSITIF ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2015 JP 2015126247**
**24.06.2015 JP 2015126249**
**31.05.2016 JP 2016108967**

(43) Date of publication of application:
**02.05.2018 Bulletin 2018/18**

(73) Proprietor: **Zeon Corporation**
**Tokyo 100-8246 (JP)**

(72) Inventors:
• **FUKUMINE, Mayumi**
**Tokyo 100-8246 (JP)**
• **YAMAMOTO, Norikazu**
**Tokyo 100-8246 (JP)**

(74) Representative: **Maiwald Patent- und Rechtsanwaltsgesellschaft mbH**
**Elisenhof**
**Elisenstraße 3**
**80335 München (DE)**

(56) References cited:
WO-A1-2011/148970    WO-A1-2011/148970
WO-A1-2014/119790    JP-A- 2012 238 489
JP-A- 2012 238 489

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a composition for an electrochemical device electrode. Also disclosed herein is an electrode for an electrochemical device, an electrochemical device, and a method of producing a composition for an electrochemical device electrode.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide range of applications.

An electrode for a lithium ion secondary battery, for example, generally includes a current collector and an electrode mixed material layer formed on the current collector. The electrode mixed material layer is formed, for example, by applying, onto the current collector, a composition for an electrode that, in addition to an electrode active material, contains a conductive material for improving conductivity and a binder for binding these components in a dispersion medium, and then drying the applied composition.

In recent years, attempts have been made to improve compositions for electrodes used in the formation of electrode mixed material layers with the aim of achieving even better electrochemical device performance.

In one specific example, PTL 1 discloses a slurry for a positive electrode containing a specific positive electrode active material, a conductive material such as carbon black, a water-dispersible elastomer, a water-soluble polymer, a dispersant, and water. According to PTL 1, a positive electrode formed from this slurry for a positive electrode enables a lithium ion secondary battery to display excellent rate characteristics and cycle characteristics.

PTL 2 discloses a positive electrode for a secondary battery, which is characterized by being composed of a collector and a positive electrode active material layer that is arranged on the collector and contains fibrous carbon, a binder and a positive electrode active material containing manganese or iron. The positive electrode for a secondary battery is also characterized in that the binder is composed of a polymer that contains a (meth)acrylate monomer polymerization unit, a vinyl monomer polymerization unit having an acid component and an $a,\beta$-unsaturated nitrile monomer polymerization unit, and the content of the vinyl monomer polymerization unit having an acid component is 1.0-3.0% by mass of the total polymerization units of the polymer.

PTL 3 discloses an electrode binder obtained by polymerizing 20 to 69 parts by weight of a (meth)acrylic acid ester, 1 to 50 parts by weight of acrylonitrile, and 30 to 50 parts by weight of a vinyl monomer containing an acid group; an emulsion for an electrode containing the electrode binder and a dispersion medium; an electrode containing the electrode binder; and a lithium ion secondary battery including the electrode.

PTL4 discloses a slurry for a lithium ion secondary battery positive electrode comprising a positive electrode active material, a binder, a conductive material, and an organic solvent, wherein said binder comprises a nitrile group containing acrylic polymer and a fluorine containing polymer, and a ratio of a viscosity measured by a coaxial cylinder type viscometer ((the viscosity at a shear speed of 2 sec$^{-1}$)/(the viscosity at the shear speed of 20 sec$^{-1}$)) is 1.0 to 2.5.

CITATION LIST

Patent Literature

PTL 1: JP 2006-134777 A
PTL 2: WO 2011/148970 A1
PTL3: JP 2012 238489 A
PTL4: WO 2014/119790 A1 and US 2015/357648 A1

SUMMARY

(Technical Problem)

However, in the slurry for an electrode described in PTL 1, the conductive material and the electrode active material tend to aggregate, which makes it difficult to form a good conduction path in the electrode mixed material layer. Moreover, when the slurry for an electrode described in PTL 1 is used, the presence of aggregates makes it difficult to form an electrode mixed material layer that is smooth and has excellent close adherence to a current collector (peel strength). Moreover, it is presumed that as a result of the electrode mixed material layer having such properties, an electrochemical device in which an electrode including the electrode mixed material layer formed from the slurry for an electrode of PTL 1 is used suffers from reduction of capacity upon storage in a high-temperature state. In other words, there is room for improvement over the conventional slurry for an electrode described above in terms of enabling an electrochemical device to display excellent battery characteristics such as high-temperature storage characteristics.

Accordingly, an objective of this disclosure is to provide a means for beneficially providing this improvement.

(Solution to Problem)

The inventors conducted diligent investigation with the aim of solving the problems set forth above. The inventors conceived an idea that by using a composition for an electrode obtained by dissolving and/or dispersing a conductive material, a particulate polymer including a monomer unit containing a specific polar group, and a water-soluble polymer in an aqueous solvent, it may be possible to obtain an electrode in which formation of aggregates is inhibited. Moreover, the inventors discovered that such an electrode enables an electrochemical device to display excellent battery characteristics such as high-temperature storage characteristics. The present disclosure was completed based on this discovery.

Specifically, this disclosure aims to beneficially solve the problems set forth above by disclosing a composition for an electrochemical device electrode comprising: a conductive material; a particulate polymer including a polar group-containing monomer unit; a water-soluble polymer; and water, wherein the polar group-containing monomer unit is at least one selected from the group consisting of a hydrophilic group-containing monomer unit and a nitrile group-containing monomer unit, wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit. The composition for an electrochemical device electrode as presently claimed is further characterized in that the composition is a conductive material paste for an electrochemical device electrode which does not contain an electrode active material. Through use of a composition for an electrode containing a conductive material, a particulate polymer including a specific polar group, a water-soluble polymer, and water as set forth above, it is possible to obtain an electrode for an electrochemical device that enables an electrochemical device to display excellent high-temperature storage characteristics.

In this disclosure, when a polymer is described as "including a monomer unit", this means that "a polymer obtained with the monomer includes a structural unit (repeating unit) derived from the monomer".

Moreover, when a substance is described as "water-soluble", this means that when 0.5 g of the substance is dissolved in 100 g of water at 25°C, insoluble content is less than 0.5 mass%.

In the presently disclosed composition for an electrochemical device electrode, the conductive material preferably has a BET specific surface area of at least 30 $m^2$/g and not more than 1,000 $m^2$/g. As a result of the BET specific surface area of the conductive material being within the range set forth above, dispersibility of the conductive material can be ensured while enabling formation of a good conduction path in an electrode mixed material layer and improvement of electrochemical device rate characteristics. Moreover, smoothness of the electrode mixed material layer can be increased, and high-temperature storage characteristics can be further improved.

In this disclosure, "BET specific surface area" refers to the nitrogen adsorption specific surface area measured by the BET method and is measured in accordance with ASTM D3037-81.

In the presently disclosed composition for an electrochemical device electrode, the conductive material is preferably a fibrous carbon nanomaterial. Through use of a fibrous carbon nanomaterial as the conductive material, electrochemical device rate characteristics can be increased through good conduction path formation in an electrode mixed material layer, and electrochemical device high-temperature storage characteristics can be further improved.

In the presently disclosed composition for an electrochemical device electrode, the water-soluble polymer preferably has a 1 mass% aqueous solution viscosity at 25°C of at least 500 mPa·s and not more than 8,000 mPa·s. Through use of a water-soluble polymer having a 1 mass% aqueous solution viscosity (25°C) within the range set forth above, conductive material and electrode active material dispersibility can be increased. Moreover, electrochemical device rate characteristics can be increased, and electrochemical device high-temperature storage characteristics can be further improved.

In this disclosure, the "1 mass% aqueous solution viscosity at 25°C" of the water-soluble polymer is measured by the method described in the EXAMPLES section of the present specification.

In the presently disclosed composition for an electrochemical device electrode, the water-soluble polymer is preferably a thickening polysaccharide. The thickening polysaccharide has excellent high-potential stability and dispersing ability for conductive material and electrode active material dispersion, and can provide the composition for an electrode with good viscosity and fluidity. Therefore, through use of the thickening polysaccharide as the water-soluble polymer, electrode mixed material layer smoothness can be increased, electrode mixed material layer adherence to a current collector can be strengthened, and electrochemical device high-temperature storage characteristics can be further improved.

In the presently disclosed composition for an electrochemical device electrode, the thickening polysaccharide is preferably a cellulosic semi-synthetic polymer compound, wherein the cellulosic semi-synthetic polymer compound is at least one of

(i) a non-ionic cellulosic semi-synthetic polymer compound selected from the group consisting of methyl cellulose, methyl ethyl cellulose, ethyl cellulose, microcrystalline cellulose, hydroxyethyl cellulose, hydroxybutyl methylcellulose, hydroxypropyl cellulose, hydroxypropyl methylcellulose, hydroxyethyl methylcellulose, hydroxypropyl methylcellulose stearoxy ether, carboxymethyl hydroxyethyl cellulose, alkyl hydroxyethyl cellulose, and nonoxynyl hydroxyethyl cellulose;

(ii) an anionic cellulosic semi-synthetic polymer compound selected from the group consisting of sodium cellulose sulfate, salts of methyl cellulose, salts of methyl ethyl cellulose, salts of ethyl cellulose, carboxymethyl cellulose, and salts of carboxymethyl cellulose; and

(iii) a cationic cellulosic semi-synthetic polymer compound selected from the group consisting of low nitrogen hydroxyethyl cellulose dimethyldiallyl ammonium chloride, O-[2-hydroxy-3-(trimethylammonio)propyl]hydroxyethyl cellulose chloride, and O-[2-hydroxy-3-(lauryldimethylammonio)propyl]hydroxyethyl cellulose chloride.

Through use of the cellulosic semi-synthetic polymer compound as the thickening polysaccharide, conductive material and electrode active material dispersibility can be improved, electrode mixed material layer smoothness can be increased, and electrode mixed material layer close adherence to a current collector can be increased. Moreover, electrochemical device rate characteristics can be increased, and electrochemical device high-temperature storage characteristics can be further improved.

In the presently disclosed composition for an electrochemical device electrode, the cellulosic semi-synthetic polymer compound as described above preferably has a degree of etherification of at least 0.5 and not more than 1.0. Through use of a cellulosic semi-synthetic polymer compound having a degree of etherification of at least 0.5 and not more than 1.0, conductive material and electrode active material dispersibility can be increased, electrochemical device rate characteristics can be increased, and electrochemical device high-temperature storage characteristics can be further improved.

The degree of etherification of the cellulosic semi-synthetic polymer compound refers to the average value for the number of hydroxyl groups that are substituted with a substituent such as a carboxymethyl group per one anhydroglucose unit forming the cellulosic semi-synthetic polymer compound, and this average value can take a value of more than 0 and less than 3. The proportion of hydroxyl groups in one molecule of the cellulosic semi-synthetic polymer compound decreases (i.e., the proportion of substituents increases) as the degree of etherification increases and the proportion of hydroxyl groups in one molecule of the cellulosic semi-synthetic polymer compound increases (i.e., the proportion of substituents decreases) as the degree of etherification decreases.

In this disclosure, the "degree of etherification" of the cellulosic semi-synthetic polymer compound is measured by the method described in the EXAMPLES section of the present specification.

In the presently disclosed composition for an electrochemical device electrode, the polar group-containing monomer unit preferably includes a hydrophilic group-containing monomer unit, wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit. Through use of the particulate polymer including a hydrophilic group-containing monomer unit as the polar group-containing monomer unit, conductive material dispersibility can be ensured, electrode active material dispersibility can be improved, and electrode mixed material layer smoothness and close adherence to a current collector can be increased. Moreover, electrochemical device rate characteristics can be increased, and electrochemical device high-temperature storage characteristics can be further improved.

In the presently disclosed composition for an electrochemical device electrode, the above described hydrophilic group-containing monomer unit preferably has a percentage content of at least 0.5 mass% and not more than 40 mass% in the particulate polymer. As a result of the particulate polymer including the hydrophilic group-containing monomer unit in the percentage content set forth above, conductive material and electrode active material dispersibility can be further improved, and electrode mixed material layer smoothness and close adherence to a current collector can be increased. Moreover, electrochemical device rate characteristics can be further increased, and electrochemical device high-temperature storage characteristics can be further improved.

In the presently disclosed composition for an electrochemical device electrode, the hydrophilic group-containing monomer unit is preferably a carboxylic acid group-containing monomer unit. Through use of the particulate polymer including a carboxylic acid group-containing monomer unit, electrode active material dispersibility can be further increased, and electrode mixed material layer smoothness and close adherence to a current collector can be increased. Moreover, electrochemical device rate characteristics can be further increased, and electrochemical device high-temperature storage characteristics can be further improved.

In the presently disclosed composition for an electrochemical device electrode, the polar group-containing monomer unit preferably includes a nitrile group-containing monomer unit. Through use of the particulate polymer including a nitrile group-containing monomer unit as the polar group-containing monomer unit, conductive material dispersibility is ensured and electrode active material dispersibility is improved. Moreover, the particulate polymer including a nitrile group-containing monomer unit has excellent electrolysis solution-resistance, can maintain excellent binding capacity in an electrolysis solution over a longer time, and enables strong adherence between an electrode mixed material layer and a current collector. Moreover, electrochemical device high-temperature storage characteristics can be further improved.

In the presently disclosed composition for an electrochemical device electrode, the particulate polymer preferably further includes a (meth)acrylic acid ester monomer unit. The particulate polymer including a (meth)acrylic acid ester monomer unit in addition to the nitrile group-containing monomer unit has even better electrolysis solution-resistance, and enables stronger adherence between an electrode mixed material layer and a current collector in an electrolysis solution. Moreover, electrochemical device high-temperature storage characteristics can be further improved.

In this disclosure, "(meth)acryl" is used to indicate "acryl" and/or "methacryl".

In the presently disclosed composition for an electrochemical device electrode, a mass ratio of percentage content of the nitrile group-containing monomer unit relative to percentage content of the (meth)acrylic acid ester monomer unit in the particulate polymer is preferably at least 1/20 and not more than 1. As a result of the ratio of the percentage contents of these monomer units being within the range set forth above, conductive material and electrode active material dispersibility can be improved, and electrode mixed material layer unevenness due to aggregation and deterioration due to charge concentration can be inhibited. Moreover, electrode mixed material layer smoothness can be increased while enabling strong adherence of the electrode mixed material layer to a current collector and further improvement of electrochemical device high-temperature storage characteristics.

In the presently disclosed composition for an electrochemical device electrode, the nitrile group-containing monomer unit and the (meth)acrylic acid ester monomer unit preferably have a total percentage content of 50 mass% or more in the particulate polymer. As a result of the total percentage content of these monomer units being 50 mass% or more, conductive material and electrode active material dispersibility can be improved, and flexibility of an obtained electrode can also be improved.

In the presently disclosed composition for an electrochemical device electrode, the particulate polymer preferably further includes a crosslinkable monomer unit. As a result of the particulate polymer further including a crosslinkable monomer unit, strength and flexibility of an obtained electrode can be improved. Moreover, elution of the particulate polymer into an electrolysis solution can be inhibited and electrochemical device high-temperature storage characteristics can be further increased.

In the presently disclosed composition for an electrochemical device electrode, the crosslinkable monomer unit is preferably at least one selected from the group consisting of an epoxy group-containing monomer unit, an N-methylol amide group-containing monomer unit, and an oxazoline group-containing monomer unit. As a result of the crosslinkable monomer unit being derived from at least one crosslinkable monomer selected from the group consisting of an epoxy group-containing monomer, an N-methylol amide group-containing monomer, and an oxazoline group-containing monomer, strength and flexibility of an obtained electrode can be further improved. Moreover, elution of the particulate polymer into electrolysis solution can be inhibited and electrochemical device high-temperature storage characteristics can be further increased.

In the presently disclosed composition for an electrochemical device electrode, the particulate polymer is preferably contained in an amount of at least 5 parts by mass and not more than 10,000 parts by mass per 100 parts by mass of the conductive material. As a result of the amount of the particulate polymer being within the range set forth above, conductive material dispersibility can be sufficiently improved while ensuring battery characteristics, such as rate characteristics, of an obtained electrochemical device.

In the presently disclosed composition for an electrochemical device electrode, the water-soluble polymer is preferably contained in an amount of at least 10 parts by mass and not more than 4,000 parts by mass per 100 parts by mass of the conductive material. As a result of the amount of the water-soluble polymer being within the range set forth above, conductive material dispersibility can be sufficiently improved while ensuring battery characteristics, such as rate characteristics, of an obtained electrochemical device.

Further disclosed herein without being claimed is a composition for an electrochemical device electrode which may further comprise an electrode active material. An electrode including an electrode mixed material layer formed from the composition for an electrochemical device electrode containing the electrode active material enables an electrochemical device to display excellent high-temperature storage characteristics.

Moreover, this disclosure aims to beneficially solve the problems set forth above by disclosing without claiming an electrode for an electrochemical device comprising: a current collector; and an electrode mixed material layer formed on the current collector using the electrode active material-containing composition for an electrochemical device electrode set forth above. The electrode including the electrode mixed material layer formed from the electrode active material-containing composition for an electrochemical device electrode set forth above enables an electrochemical device to display excellent high-temperature storage characteristics.

Furthermore, this disclosure aims to beneficially solve the problems set forth above by disclosing without claiming an electrochemical device comprising the electrode for an electrochemical device set forth above. The electrochemical device including the electrode for an electrochemical device set forth above has excellent battery characteristics such as high-temperature storage characteristics.

Also disclosed herein is a method of producing a composition for an electrochemical device electrode comprising: a step (1-1) of mixing a conductive material, a water-soluble polymer, and water to obtain a conductive material dispersion liquid; and a step (1-2) of mixing the conductive material dispersion liquid and a particulate polymer including a polar group-containing monomer unit, wherein the polar group-containing monomer unit is at least one selected from the group consisting of a hydrophilic group-containing monomer unit and a nitrile group-containing monomer unit, wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit. Use of a composition for an electrochemical device electrode obtained through the steps set forth above enables an electrochemical device to display excellent high-temperature storage characteristics.

Further disclosed without being claimed is the above method of producing a composition for an electrochemical device electrode, wherein the step (1-2) may be a step of mixing the conductive material dispersion liquid, the particulate polymer including the polar group-containing monomer unit, and an electrode active material. Formation of an electrode mixed material layer from a composition for an electrochemical device electrode obtained through the steps set forth above enables an electrochemical device to display excellent high-temperature storage characteristics.

Moreover, the present disclosure provides a method of producing a composition for an electrochemical device electrode comprising: a step (II-1) of mixing a conductive material, a particulate polymer including a polar group-containing monomer unit, a water-soluble polymer, and water to obtain a preliminary mixture; and a step (II-2) of mixing the preliminary mixture and an electrode active material, wherein the polar group-containing monomer unit is at least one selected from the group consisting of a hydrophilic group-containing monomer unit and a nitrile group-containing monomer unit, wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit. Use of a composition for an electrochemical device electrode obtained through the steps set forth above enables an electrochemical device to display excellent high-temperature storage characteristics.

(Advantageous Effect)

According to this disclosure, it is possible to provide a composition for an electrochemical device electrode that enables an electrochemical device to display excellent high-temperature storage characteristics and a method of producing this composition for an electrochemical device electrode.

Moreover, according to this disclosure, it is possible to provide an electrode for an electrochemical device that enables an electrochemical device to display excellent high-temperature storage characteristics and an electrochemical device having excellent high-temperature storage characteristics.

DETAILED DESCRIPTION

The following provides a detailed description of embodiments of the present disclosure.

The presently disclosed composition for an electrochemical device electrode can be used as a material in production of an electrode for an electrochemical device. For example, the presently disclosed composition for an electrochemical device electrode may be used in production of an electrode mixed material layer containing an electrode active material that accepts and donates electrons or in production of a conductive adhesion layer provided between an electrode mixed material layer and a current collector to ensure adhesiveness and electrical continuity between the electrode mixed material layer and the current collector. The presently disclosed composition for an electrochemical device electrode is preferably used as a material in production of an electrode mixed material layer of an electrode for an electrochemical device. The presently disclosed composition for an electrochemical device electrode can be produced, for example, by the presently disclosed method of producing a composition for an electrochemical device electrode.

In the following description, the term "conductive material paste for an electrochemical device electrode" is used to refer to a "composition for an electrochemical device electrode that contains a conductive material, a particulate polymer including a polar group-containing monomer unit, a water-soluble polymer, and water, but does not contain an electrode active material", and the term "slurry for an electrochemical device electrode" is used to refer to a "composition for an electrochemical device electrode that contains a conductive material, a particulate polymer including a polar group-containing monomer unit, a water-soluble polymer, an electrode active material, and water".

The slurry for an electrochemical device electrode can be used in formation of an electrode mixed material layer of the presently disclosed electrode for an electrochemical device.

Moreover, the presently disclosed electrochemical device includes the presently disclosed electrode for an electrochemical device.

Although the presently disclosed composition for an electrochemical device electrode can be used, for example, in production of an electrode mixed material layer or a conductive adhesion layer as previously explained, the following mainly describes a case in which the presently disclosed composition for an electrochemical device electrode is used in production of an electrode mixed material layer.

(Composition for electrochemical device electrode)

The presently disclosed composition for an electrochemical device electrode contains, in an aqueous solvent, a conductive material, a particulate polymer including a hydrophilic group-containing monomer unit and/or a nitrile group-containing monomer unit as a polar group-containing monomer unit, wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit, and a water-soluble polymer. Disclosed herein without being claimed is the presently disclosed composition for an electrochemical device electrode which further contains an electrode active material. Besides these components, the presently disclosed composition for an electrochemical device electrode may contain other components that can be used in electrodes of electrochemical devices.

The particulate polymer including the polar group-containing monomer unit and the water-soluble polymer can contribute to improving conductive material and electrode active material dispersibility in the aqueous solvent. Moreover, a particulate polymer including a hydrophilic group-containing monomer unit as described above as the polar group-containing monomer unit can favorably bind to a current collector, such as aluminum foil. On the other hand, a particulate polymer that includes a nitrile group-containing monomer unit as the polar group-containing monomer unit has excellent electrolysis solution-resistance and, consequently, exhibits little elution into electrolysis solution.

Therefore, an electrode mixed material layer having good properties can be formed through use of the presently disclosed composition for an electrochemical device electrode containing the above-described particulate polymer and water-soluble polymer. Moreover, an electrochemical device having excellent high-temperature storage characteristics and the like can be obtained through use of an electrode including this electrode mixed material layer.

<Conductive material>

The conductive material ensures electrical contact amongst an electrode active material. Examples of conductive materials that can be used include, but are not specifically limited to, carbon black such as acetylene black, Ketjen black® (Ketjen black is a registered trademark in Japan, other countries, or both), and furnace black; fibrous carbon nanomaterials (also referred to as "fibrous conductive carbon materials") such as single-walled or multi-walled carbon nanotubes (multi-walled carbon nanotubes are inclusive of cup-stacked carbon nanotubes), carbon nanohorns, nanosize vapor-grown carbon fiber, and nanosize carbon fiber obtained through carbonization and pulverization of organic fiber; sheet-shaped conductive carbon materials such as single layer or multilayer graphene and carbon nonwoven fabric sheet obtained through pyrolysis of nonwoven fabric made from polymer fiber; and fibers and foils of various metals. One of these conductive materials may be used individually, or two or more of these conductive materials may be used in combination. In this disclosure, the term "fibrous" refers to a material having an aspect ratio of 10 or more as measured using a transmission electron microscope (TEM). Moreover, the term "sheet-shaped" refers to a material having a structure that spreads out in a planar form. Note that in this disclosure, fibrous carbon nanomaterials are not considered to be included among sheet-shaped conductive carbon materials having a structure that spreads out in a planar form.

Of these conductive materials, carbon black, fibrous carbon nanomaterials, and sheet-shaped conductive carbon materials are preferable from a viewpoint of chemical stability and from a viewpoint of increasing the contact frequency amongst proximal conductive material such as to form a stable conduction path while achieving high-efficiency electron transfer and causing excellent conductivity to be displayed. Moreover, fibrous carbon nanomaterials are more preferable from a viewpoint of sufficiently improving battery characteristics such as high-temperature storage characteristics even when used in a small amount.

Among fibrous carbon nanomaterials, carbon nanotubes (hereinafter, also referred to as "CNTs") are particularly preferable. CNTs disperse comparatively well in the composition for an electrode, and through use of CNTs as the conductive material, preservation stability of the composition for an electrode can be increased. In addition, CNTs have particularly high conductivity and chemical stability. Therefore, when CNTs are used as the conductive material, electrochemical device rate characteristics can be further increased, and electrochemical device high-temperature storage characteristics can be further improved.

Examples of CNTs that may suitably be used as the conductive material include CNTs used by themselves and CNTs used with another fibrous carbon nanomaterial as a mixture (i.e., a CNT-containing fibrous carbon nanomaterial).

Note that conductive materials such as fibrous carbon nanomaterials normally tend to aggregate and are difficult to disperse. However, in a case in which the composition for an electrode is produced using a water-soluble polymer having a 1 mass% aqueous solution viscosity (25°C) within a specific range such as described further below, a conductive material such as a fibrous carbon nanomaterial can be favorably and stably dispersed.

[Properties of conductive material]

The average particle diameter of carbon black that may suitably be used as the conductive material is preferably 10 nm or more, more preferably 15 nm or more, and even more preferably 20 nm or more, and is preferably 100 nm or less, more preferably 50 nm or less, and even more preferably 40 nm or less. When the average particle diameter of the carbon black is within any of the ranges set forth above, dispersibility of the carbon black serving as the conductive material can be ensured while also enabling good conduction path formation in an electrode mixed material layer. Moreover, electrode mixed material layer smoothness and electrochemical device rate characteristics can be increased, and electrochemical device high-temperature storage characteristics can be further improved.

In this disclosure, the "average particle diameter of carbon black" can be determined by using a TEM to measure the particle diameter (greatest length among lengths of line segments linking two points on the outer edge of an individual particle) of each of 100 randomly selected carbon black particles.

The BET specific surface area of the conductive material is preferably 30 $m^2/g$ or more, more preferably 50 $m^2/g$ or more, and even more preferably 100 $m^2/g$ or more, and is preferably 1,000 $m^2/g$ or less, more preferably 800 $m^2/g$ or less, and even more preferably 400 $m^2/g$ or less. When the specific surface area of the conductive material is within any of the ranges set forth above, conductive material dispersibility can be ensured while enabling good conductive path formation in an electrode mixed material layer, and electrode mixed material layer smoothness can be improved. Moreover, electrochemical device rate characteristics can be increased, and electrochemical device high-temperature storage characteristics can be further improved.

The density of the conductive material is preferably 0.01 $g/cm^3$ or more, and more preferably 0.02 $g/cm^3$ or more, and is preferably 0.5 $g/cm^3$ or less, more preferably 0.3 $g/cm^3$ or less, and even more preferably 0.2 $g/cm^3$ or less. When the density of the conductive material is within any of the ranges set forth above, conductive material scattering can be inhibited, and workability can be ensured in production of the composition for an electrode. Moreover, dispersibility can be ensured while enabling good conduction path formation in an electrode mixed material layer, electrode mixed material layer smoothness and electrochemical device rate characteristics can be increased, and electrochemical device high-temperature storage characteristics can be further improved.

In this disclosure, the "density of the conductive material" is the bulk density and can be measured in accordance with JIS Z 8901.

The average diameter of CNTs that may particularly suitably be used as the conductive material is preferably 1 nm or more, and more preferably 8 nm or more, and is preferably 50 nm or less, more preferably 40 nm or less, and even more preferably 20 nm or less.

The average length of CNTs that may particularly suitably be used as the conductive material is preferably 1 $\mu$m or more, more preferably 5 $\mu$m or more, and even more preferably 8 $\mu$m or more, and is preferably 40 $\mu$m or less, more preferably 30 $\mu$m or less, and even more preferably 20 $\mu$m or less.

When the average diameter and the average length are at least any of the lower limits set forth above, aggregation of the CNTs can be sufficiently inhibited and sufficient dispersibility of the CNTs as the conductive material can be ensured. Moreover, when the average diameter and the average length are not more than any of the upper limits set forth above, the CNTs can form a good conduction path in an electrode mixed material layer and electrochemical device rate characteristics can be improved.

Examples of methods by which CNTs having the properties set forth above can be prepared include, but are not specifically limited to, known methods such as an arc-discharge method, a laser ablation method, and a super growth method.

<Particulate polymer>

In an electrode produced by forming an electrode mixed material layer on a current collector using the presently disclosed composition for an electrode, the particulate polymer acts as a water-insoluble binder that holds components contained in the electrode mixed material layer so that these components do not become detached from the electrode mixed material layer.

The particulate polymer is a polymer that includes at least a polar group-containing monomer unit and may optionally include other monomer units besides the polar group-containing monomer unit.

In this disclosure, when a substance is described as "water-insoluble", this means that when 0.5 g of the substance is dissolved in 100 g of water at 25°C, insoluble content is 90 mass% or more.

[Polar group-containing monomer unit]

Examples of the polar group-containing monomer unit include a hydrophilic group-containing monomer unit and a nitrile group-containing monomer unit, wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit. Specifically, the particulate polymer is required to include either or both of a hydrophilic group-containing monomer unit and a nitrile group-containing monomer unit. The particulate polymer preferably includes both a hydrophilic group-containing monomer unit and a nitrile group-containing monomer unit. When a particulate polymer that includes both a hydrophilic group-containing monomer unit and a nitrile group-containing monomer unit is used, electrochemical device rate characteristics can be increased, and electrochemical device high-temperature storage characteristics can be further improved.

-Hydrophilic group-containing monomer unit-

The hydrophilic group-containing monomer unit is a repeating unit that is derived from a hydrophilic group-containing monomer. The hydrophilic group-containing monomers that can be used to form the hydrophilic group-containing monomer unit are selected from the group consisting of carboxylic acid group-containing monomers, hydroxyl group-containing monomers, sulfonate group-containing monomers, and phosphate group-containing monomers.

Examples of carboxylic acid group-containing monomers that can be used include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methylallyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxyl group through hydrolysis can also be used as a carboxylic acid group-containing monomer.

Other examples include monoesters and diesters of $\alpha,\beta$-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of hydroxyl group-containing monomers that can be used include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1$-COO-$(C_qH_{2q}O)_p$-H (where p represents an integer of 2 to 9, q represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In this disclosure, "(meth)allyl" is used to indicate "allyl" and/or "methallyl", and "(meth)acryloyl" is used to indicate "acryloyl" and/or "methacryloyl".

Examples of sulfonate group-containing monomers that can be used include vinyl sulfonic acid, methyl vinyl sulfonic acid, (meth)allyl sulfonic acid, styrene sulfonic acid, (meth)acrylic acid-2-ethyl sulfonate, 2-acrylamido-2-methylpropane sulfonic acid, and 3-allyloxy-2-hydroxypropane sulfonic acid.

Examples of phosphate group-containing monomers that can be used include 2-(meth)acryloyloxyethyl phosphate, methyl-2-(meth)acryloyloxyethyl phosphate, and ethyl-(meth)acryloyloxyethyl phosphate.

One of these hydrophilic group-containing monomers may be used individually, or two or more of these hydrophilic group-containing monomers may be used in combination. Of these hydrophilic group-containing monomers, carboxylic acid group-containing monomers, hydroxyl group-containing monomers, and sulfonate group-containing monomers are preferable, carboxylic acid group-containing monomers and hydroxyl group-containing monomers are more preferable, carboxylic acid group-containing monomers are even more preferable, and monocarboxylic acids are particularly preferable from a viewpoint of increasing electrode active material dispersibility in the composition for an electrode (slurry for an electrode) while ensuring conductive material dispersibility, improving electrode mixed material layer smoothness and close adherence to a current collector, improving electrochemical device rate characteristics, and further improving electrochemical device high-temperature storage characteristics.

The percentage content of the above described hydrophilic group-containing monomer unit in the particulate polymer when all repeating units in the particulate polymer are taken to be 100 mass% is preferably 0.5 mass% or more, and more preferably 2 mass% or more, and is preferably 40 mass% or less, more preferably 20 mass% or less, even more preferably 10 mass% or less, and particularly preferably 4 mass% or less. When the percentage content of the hydrophilic group-containing monomer unit is 0.5 mass% or more, an electrode active material can be favorably dispersed in the composition for an electrode (slurry for an electrode) while ensuring conductive material dispersibility, and when the percentage content of the hydrophilic group-containing monomer unit is 40 mass% or less, electrode mixed material layer unevenness and deterioration due to charge concentration can be inhibited without excessive loss of conductive material dispersibility. Accordingly, setting the percentage content of the hydrophilic group-containing monomer unit within any of the ranges set forth above can increase electrode mixed material layer smoothness and peel strength, can increase electrochemical device rate characteristics, and can further improve electrochemical device high-temperature storage characteristics.

-Nitrile group-containing monomer unit-

The nitrile group-containing monomer unit is a repeating unit that is derived from a nitrile group-containing monomer. Examples of nitrile group-containing monomers that can be used to form the nitrile group-containing monomer unit include $\alpha,\beta$-ethylenically unsaturated nitrile monomers. Specifically, any $\alpha,\beta$-ethylenically unsaturated compound that has a nitrile group may be used as the $\alpha,\beta$-ethylenically unsaturated nitrile monomer without any specific limitations and examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these nitrile group-containing monomers, acrylonitrile and methacrylonitrile (also referred to collectively as "(meth)acrylonitrile monomers") are preferable, and acrylonitrile is more preferable as a nitrile group-containing monomer from a viewpoint of increasing binding capacity of the particulate polymer.

One of these nitrile group-containing monomers may be used individually, or two or more of these nitrile group-containing monomers may be used in combination.

The percentage content of the nitrile group-containing monomer unit in the particulate polymer when all repeating units in the particulate polymer are taken to be 100 mass% is preferably 3 mass% or more, more preferably 4 mass% or more, and even more preferably 6 mass% or more, and is preferably 30 mass% or less, more preferably 27 mass% or less, and even more preferably 25 mass% or less. Setting the percentage content of the nitrile group-containing monomer unit within any of the ranges set forth above increases the electrolysis solution-resistance of the particulate polymer. Moreover, the particulate polymer can maintain excellent binding capacity in electrolysis solution over a longer time and strong adherence between an electrode mixed material layer and a current collector can be achieved. As a result, electrochemical device high-temperature storage characteristics can be further improved.

Examples of the particulate polymer including the polar group-containing monomer unit that are suitable from a viewpoint of ensuring close adherence between an electrode mixed material layer and a current collector include an acrylic polymer (polymer including a (meth)acrylic acid ester monomer unit) and a conjugated diene polymer (polymer including an aliphatic conjugated diene monomer unit or hydrogenated product thereof).

[Acrylic polymer]

In addition to the polar group-containing monomer unit (hydrophilic group-containing monomer unit and nitrile group-containing monomer unit) set forth above and the (meth)acrylic acid ester monomer unit, the acrylic polymer may include a crosslinkable group-containing monomer unit, an aromatic vinyl monomer unit, and the like as monomer units.

Note that the acrylic polymer may also include monomer units other than those mentioned above.

-(Meth)acrylic acid ester monomer unit-

The (meth)acrylic acid ester monomer unit is a repeating unit that is derived from a (meth)acrylic acid ester monomer. Examples of (meth)acrylic acid ester monomers that can be used to form the (meth)acrylic acid ester monomer unit include alkyl (meth)acrylates and perfluoroalkyl (meth)acrylates.

Examples of alkyl (meth)acrylates that can be used include alkyl acrylates such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and alkyl methacrylates such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of perfluoroalkyl (meth)acrylates that can be used include 2-(perfluoroalkyl)ethyl acrylates such as 2-(perfluorobutyl)ethyl acrylate, 2-(perfluoropentyl)ethyl acrylate, 2-(perfluorohexyl)ethyl acrylate, 2-(perfluorooctyl)ethyl acrylate, 2-(perfluorononyl)ethyl acrylate, 2-(perfluorodecyl)ethyl acrylate, 2-(perfluorododecyl)ethyl acrylate, 2-(perfluorotetradecyl)ethyl acrylate, and 2-(perfluorohexadecyl)ethyl acrylate; and 2-(perfluoroalkyl)ethyl methacrylates such as 2-(perfluorobutyl)ethyl methacrylate, 2-(perfluoropentyl)ethyl methacrylate, 2-(perfluorohexyl)ethyl methacrylate, 2-(perfluorooctyl)ethyl methacrylate, 2-(perfluorononyl)ethyl methacrylate, 2-(perfluorodecyl)ethyl methacrylate, 2-(perfluorododecyl)ethyl methacrylate, 2-(perfluorotetradecyl)ethyl methacrylate, and 2-(perfluorohexadecyl)ethyl methacrylate.

One of these examples may be used individually, or two or more of these examples may be used in combination.

From a viewpoint of causing the acrylic polymer to swell to an appropriate degree in electrolysis solution and increasing rate characteristics while ensuring electrochemical device high-temperature storage characteristics, the carbon number of an alkyl group or perfluoroalkyl group bonded to a non-carbonyl oxygen atom in the alkyl (meth)acrylate or perfluoroalkyl (meth)acrylate is preferably 1 or more, and more preferably 3 or more, and is preferably 14 or less, and more preferably 10 or less.

The percentage content of the (meth)acrylic acid ester monomer unit in the acrylic polymer when all repeating units in the acrylic polymer are taken to be 100 mass% is preferably 40 mass% or more, more preferably 50 mass% or more, even more preferably 65 mass% or more, and particularly preferably 75 mass% or more, and is preferably 97 mass% or less, more preferably 95 mass% or less, and even more preferably 90 mass% or less. When the percentage content of the (meth)acrylic acid ester monomer unit is within any of the ranges set forth above, electrolysis solution-resistance of the acrylic polymer is increased, and thus the acrylic polymer can maintain excellent binding capacity in electrolysis solution over a longer time and even stronger adherence between an electrode mixed material layer and a current collector can be achieved. As a result, electrochemical device high-temperature storage characteristics can be further improved.

In the case of an acrylic polymer including a nitrile group-containing monomer unit as the polar group-containing monomer unit, a mass ratio of the percentage content of the nitrile group-containing monomer unit relative to the percentage content of the (meth)acrylic acid ester monomer unit is preferably 1/20 or more, and more preferably 3/17 or more, and is preferably 1 or less, more preferably 3/7 or less, and even more preferably 1/3 or less. As a result of the ratio of the percentage contents of the nitrile group-containing monomer unit and the (meth)acrylic acid ester monomer unit being within any of the ranges set forth above, conductive material and electrode active material dispersibility in the composition for an electrode (slurry for an electrode) can be improved, and electrode mixed material layer unevenness due to aggregation and deterioration due to charge concentration can be inhibited. Moreover, electrode mixed material layer smoothness can be increased while enabling strong adherence of the electrode mixed material layer to a current collector and further improvement of electrochemical device high-temperature storage characteristics.

Moreover, in the case of an acrylic polymer including a nitrile group-containing monomer unit as the polar group-containing monomer unit, the total percentage content of the nitrile group-containing monomer unit and the (meth)acrylic acid ester monomer unit is preferably 50 mass% or more, more preferably 60 mass% or more, and even more preferably 65 mass% or more. When the total percentage content of the nitrile group-containing monomer unit and the (meth)acrylic acid ester monomer unit is 50 mass% or more, conductive material and electrode active material dispersibility in the composition for an electrode (slurry for an electrode) and flexibility of an obtained electrode can be improved. The upper limit for the total percentage content of the nitrile group-containing monomer unit and the (meth)acrylic acid ester monomer unit in the acrylic polymer is 100 mass% or less, and preferably 95 mass% or less.

-Crosslinkable monomer unit-

The crosslinkable monomer unit is a repeating unit that is derived from a crosslinkable monomer. From a viewpoint of improving electrode strength and flexibility, inhibiting elution of the acrylic polymer into electrolysis solution, and further improving electrochemical device high-temperature storage characteristics, it is preferable that the crosslinkable monomer used to form the crosslinkable monomer unit is a monomer having a thermally crosslinkable functional group (thermally crosslinkable monomer) such as an epoxy group-containing monomer, an N-methylol amide group-containing monomer, or an oxazoline group-containing monomer.

Examples of epoxy group-containing monomers include monomers that include a carbon-carbon double bond and an epoxy group.

Examples of monomers including a carbon-carbon double bond and an epoxy group include unsaturated glycidyl ethers such as vinyl glycidyl ether, allyl glycidyl ether, butenyl glycidyl ether, and o-allylphenyl glycidyl ether; diene or polyene monoepoxides such as butadiene monoepoxide, chloroprene monoepoxide, 4,5-epoxy-2-pentene, 3,4-epoxy-1-vinyl cyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid.

Examples of N-methylol amide group-containing monomers include (meth)acrylamides including a methylol group such as N-methylol (meth)acrylamide.

Examples of oxazoline group-containing monomers include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

One of these crosslinkable monomers may be used individually, or two or more of these crosslinkable monomers may be used in combination. Of these crosslinkable monomers, epoxy group-containing monomers are preferable.

The percentage content of the crosslinkable monomer unit in the acrylic polymer when all repeating units in the acrylic polymer are taken to be 100 mass% is preferably 0.1 mass% or more, and is preferably 10 mass% or less, and more preferably 5 mass% or less. When the percentage content of the crosslinkable monomer unit is within any of the ranges set forth above, strength and flexibility of an obtained electrode can be improved in a good balance. Moreover, elution of the acrylic polymer into electrolysis solution can be inhibited and electrochemical device high-temperature storage characteristics can be further improved.

-Aromatic vinyl monomer unit-

The aromatic vinyl monomer unit is a repeating unit that is derived from an aromatic vinyl monomer. Examples of aromatic vinyl monomers that can be used to form the aromatic vinyl monomer unit include styrene, $\alpha$-methylstyrene, vinyltoluene, and divinyl benzene. One of these aromatic vinyl monomers may be used individually, or two or more of these aromatic vinyl monomers may be used in combination. Of these aromatic vinyl monomers, styrene is preferable.

The percentage content of the aromatic vinyl monomer unit in the acrylic polymer when all repeating units in the acrylic polymer are taken to be 100 mass% is preferably 5 mass% or more, and more preferably 8 mass% or more, and is preferably 40 mass% or less, and more preferably 30 mass% or less. When the percentage content of the aromatic vinyl monomer unit is within any of the ranges set forth above, conductive material dispersibility can be increased, and electrode mixed material layer smoothness can be improved. In addition, electrode strength can be ensured.

[Conjugated diene polymer]

Specific examples of the conjugated diene polymer include aliphatic conjugated diene polymers such as polybutadiene and polyisoprene; aromatic vinyl-aliphatic conjugated diene copolymers such as a styrene-butadiene polymer (SBR); vinyl cyanide-conjugated diene copolymers such as an acrylonitrile-butadiene copolymer (NBR); hydrogenated SBR; and hydrogenated NBR. Of these conjugated diene polymers, aromatic vinyl-aliphatic conjugated diene copolymers such as a styrene-butadiene polymer (SBR) are preferable. In addition to the polar group-containing monomer unit (hydrophilic group-containing monomer unit and nitrile group-containing monomer unit) set forth above, an aromatic vinyl monomer unit, and an aliphatic conjugated diene monomer unit, the aromatic vinyl-aliphatic conjugated diene copolymer may include, for example, a (meth)acrylic acid ester monomer unit and the like as monomer units. Note that the aromatic vinyl-conjugated diene copolymer may include monomer units other than those mentioned above.

-Aromatic vinyl monomer unit-

The aromatic vinyl monomer unit is a repeating unit that is derived from an aromatic vinyl monomer. Examples of aromatic vinyl monomers that can be used to form the aromatic vinyl monomer unit include those previously described in the "Acrylic polymer" section. Of these aromatic vinyl monomers, styrene is preferable.

One of these aromatic vinyl monomers may be used individually, or two or more of these aromatic vinyl monomers may be used in combination.

The percentage content of the aromatic vinyl monomer unit in the aromatic vinyl-aliphatic conjugated diene copolymer when all repeating units in the aromatic vinyl-aliphatic conjugated diene copolymer are taken to be 100 mass% is preferably 35 mass% or more, more preferably 45 mass% or more, and even more preferably 55 mass% or more, and is preferably 80 mass% or less, more preferably 70 mass% or less, and even more preferably 65 mass% or less. When the percentage content of the aromatic vinyl monomer unit is within any of the ranges set forth above, conductive material dispersibility can be increased and electrode mixed material layer smoothness can be improved. In addition, electrode strength can be ensured.

-Aliphatic conjugated diene monomer unit-

The aliphatic conjugated diene monomer unit is a repeating unit that is derived from an aliphatic conjugated diene monomer. Examples of aliphatic conjugated diene monomers that can be used to form the aliphatic conjugated diene monomer unit include 1,3-butadiene, 2-methyl-1,3-butadiene, 2,3-dimethyl-1,3-butadiene, 2-chloro-1,3-butadiene, substituted linear conjugated pentadienes, and substituted and branched conjugated hexadienes. Of these aliphatic conjugated diene monomers, 1,3-butadiene is preferable.

One of these aliphatic conjugated diene monomers may be used individually, or two or more of these aliphatic conjugated diene monomers may be used in combination.

The percentage content of the aliphatic conjugated diene monomer unit in the aromatic vinyl-aliphatic conjugated diene copolymer when all repeating units in the aromatic vinyl-aliphatic conjugated diene copolymer are taken to be 100 mass% is preferably 20 mass% or more, and more preferably 30 mass% or more, and is preferably 70 mass% or less, more preferably 60 mass% or less, even more preferably 50 mass% or less, and particularly preferably 35 mass% or less. When the percentage content of the aliphatic conjugated diene monomer unit is within any of the ranges set forth above, conductive material dispersibility can be increased and electrode mixed material layer smoothness can be improved. In addition, electrode strength can be ensured.

-(Meth)acrylic acid ester monomer unit-

The (meth)acrylic acid ester monomer unit is a repeating unit that is derived from a (meth)acrylic acid ester monomer. Examples of (meth)acrylic acid ester monomers that can be used to form the (meth)acrylic acid ester monomer unit include those previously described in the "Acrylic polymer" section.

One of these (meth)acrylic acid ester monomers may be used individually, or two or more of these (meth)acrylic acid ester monomers may be used in combination.

From a viewpoint of causing the aromatic vinyl-aliphatic conjugated diene copolymer to swell to an appropriate degree in electrolysis solution and increasing rate characteristics while ensuring electrochemical device high-temperature storage characteristics, the carbon number of an alkyl group or perfluoroalkyl group bonded to a non-carbonyl oxygen atom in the alkyl (meth)acrylate or perfluoroalkyl (meth)acrylate is preferably 1 or more, and more preferably 3 or more, and is preferably 14 or less, and more preferably 10 or less.

In a case in which the aromatic vinyl-aliphatic conjugated diene copolymer includes a (meth)acrylic acid ester monomer unit, the percentage content of the (meth)acrylic acid ester monomer unit in the aromatic vinyl-aliphatic conjugated diene copolymer when all repeating units in the aromatic vinyl-aliphatic conjugated diene copolymer are taken to be 100 mass% is preferably 2 mass% or more, more preferably 5 mass% or more, and even more preferably 10 mass% or more, and is preferably 40 mass% or less, more preferably 35 mass% or less, and even more preferably 30 mass% or less. When the percentage content of the (meth)acrylic acid ester monomer unit is within any of the ranges set forth above, the aromatic vinyl-aliphatic conjugated diene copolymer can be caused to display a suitable degree of swelling in electrolysis solution, and the aromatic vinyl-aliphatic conjugated diene copolymer can be caused to display both excellent binding capacity and excellent electrolysis solution retention in electrolysis solution. Therefore, the polymer retains sufficient electrolysis solution and enables strong adherence between an electrode mixed material layer and a current collector in electrolysis solution and, as a result, can further improve electrochemical device high-temperature storage characteristics.

[Production method of particulate polymer]

The particulate polymer can be produced, for example, through polymerization, in an aqueous solvent, of a monomer composition that contains the monomers set forth above.

In this disclosure, the percentage content of each of the monomers in the monomer composition can be set in accordance with the percentage content of each of the monomer units (repeating units) in the particulate polymer.

The aqueous solvent is not specifically limited so long as the particulate polymer can be dispersed in a particulate state therein, and may be water used individually or a mixed solvent of water and another solvent.

The mode of polymerization is not specifically limited and may, for example, be any of solution polymerization, suspension polymerization, bulk polymerization, and emulsion polymerization. The method of polymerization may, for example, be any of ionic polymerization, radical polymerization, and living radical polymerization.

Commonly used emulsifiers, dispersants, polymerization initiators, polymerization aids, and the like may be used in the polymerization in an amount that is also the same as commonly used.

Although no specific limitations are placed on the glass transition temperature of the particulate polymer obtained as described above, the glass transition temperature is preferably 15°C or lower, and more preferably 0°C or lower. When the glass transition temperature of the particulate polymer is 15°C or lower, an obtained electrode can be provided with sufficient flexibility. Examples of methods by which the glass transition temperature of the particulate polymer can be adjusted include, but are not specifically limited to, altering the types and amounts of monomers used in formation of the particulate polymer. Although no specific limitations are placed on the lower limit for the glass transition temperature of the particulate polymer, the lower limit is normally -40°C or higher.

The glass transition temperature of the particulate polymer can be measured by a method described in JP 2014-165108 A.

The volume-average particle diameter of the particulate polymer is preferably 0.01 μm or more, and is preferably 0.5 μm or less, and more preferably 0.3 μm or less. When the volume-average particle diameter of the particulate polymer is 0.01 μm or more, electrode mixed material layer porosity and battery characteristics can be ensured, and when the volume-average particle diameter of the particulate polymer is 0.5 μm or less, binding capacity of the particulate polymer can be ensured.

The volume-average particle diameter of the particulate polymer can be determined as a particle diameter at which, in a particle diameter distribution obtained by wet measurement using a laser diffraction particle diameter distribution analyzer, the cumulative volume calculated from a small diameter end of the distribution reaches 50%.

[Amount of particulate polymer]

The amount of the particulate polymer in the composition for an electrode is preferably at least 5 parts by mass and not more than 10,000 parts by mass per 100 parts by mass of the conductive material. When the amount of the particulate polymer is within the range set forth above, conductive material dispersibility can be sufficiently improved while ensuring battery characteristics, such as rate characteristics, of an obtained electrochemical device.

In a case in which carbon black is used as the conductive material, the amount of the particulate polymer in the composition for an electrode per 100 parts by mass of carbon black is preferably 5 parts by mass or more, more preferably 10 parts by mass or more, and even more preferably 30 parts by mass or more, and is preferably 100 parts by mass or less, more preferably 80 parts by mass or less, and even more preferably 70 parts by mass or less. When the amount of the particulate polymer per 100 parts by mass of carbon black is 5 parts by mass or more, carbon black dispersibility in the composition for an electrode can be ensured. On the other hand, when the amount of the particulate polymer per 100 parts by mass of carbon black is 100 parts by mass or less, a sufficient dispersibility improvement effect that is commensurate with an increase in the amount of the particulate polymer can be obtained. Moreover, in an electrochemical device including an electrode that includes an electrode mixed material layer formed from the composition for an electrode, an increase in internal resistance can be suppressed and rate characteristics are not excessively reduced.

In a case in which a fibrous carbon nanomaterial is used as the conductive material, the amount of the particulate polymer in the composition for an electrode per 100 parts by mass of the fibrous carbon nanomaterial is preferably 500 parts by mass or more, and more preferably 800 parts by mass or more, and is preferably 10,000 parts by mass or less, more preferably 5,000 parts by mass or less, and even more preferably 2,500 parts by mass or less. When the amount of the particulate polymer per 100 parts by mass of the fibrous carbon nanomaterial is 500 parts by mass or more, fibrous carbon nanomaterial dispersibility can be ensured. On the other hand, when the amount of the particulate polymer per 100 parts by mass of the fibrous carbon nanomaterial is 10,000 parts by mass or less, in an electrochemical device including an electrode that includes an electrode mixed material layer formed from the composition for an electrode, an increase in internal resistance can be suppressed and rate characteristics are not excessively reduced.

<Water-soluble polymer>

The water-soluble polymer is a component that, in the composition for an electrode, contributes to conductive material and electrode active material dispersion stability through at least some of the water-soluble polymer being adsorbed onto the conductive material surface or electrode active material surface. Moreover, the water-soluble polymer imparts viscosity on the composition for an electrode to ensure applicability while inhibiting sedimentation of components in the composition for an electrode. Examples of water-soluble polymers that can be used include natural polymer compounds, semi-synthetic polymer compounds, and synthetic polymer compounds. These water-soluble polymers can be collected or produced by known methods.

[Natural polymer compounds]

Examples of natural polymer compounds include polysaccharides and proteins derived from plants and animals. Other examples of natural polymer compounds that can be used in some situations include those that have been subjected to fermentation treatment by microorganisms or the like, or treatment by heat. These natural polymer compounds can be classified as plant-based natural polymer compounds, animal-based natural polymer compounds, microorganism-produced natural polymer compounds, and so forth.

Examples of plant-based natural polymer compounds include gum arabic, gum tragacanth, galactan, guar gum, carob gum, karaya gum, carrageenan, pectin, kannan, quince seed (marmelo), algal colloid (phaeophyceae extract), starch (for example, starch derived from rice, corn, potato, or wheat), and glycyrrhizin.

Examples of animal-based natural polymer compounds include collagen, casein, albumin, and gelatin.

Examples of microorganism-produced natural polymers include xanthan gum, dextran, succinoglucan, and pullulan.

[Semi-synthetic polymer compounds]

A semi-synthetic polymer compound is obtained through modification of any of the above-described natural polymer compounds through a chemical reaction. Such semi-synthetic polymer compounds can be classified as starch-based semi-synthetic polymer compounds, cellulosic semi-synthetic polymer compounds, alginic acid-based semi-synthetic polymer compounds, microorganism-produced semi-synthetic polymer compounds, and so forth.

Examples of starch-based semi-synthetic polymer compounds include solubilized starch, carboxymethyl starch, methylhydroxypropyl starch, and modified potato starch.

Cellulosic semi-synthetic polymer compounds can be classified as non-ionic, anionic, and cationic.

Examples of non-ionic cellulosic semi-synthetic polymer compounds that can be used include alkyl celluloses such as methyl cellulose, methyl ethyl cellulose, ethyl cellulose, and microcrystalline cellulose; and hydroxyalkyl celluloses such as hydroxyethyl cellulose, hydroxybutyl methylcellulose, hydroxypropyl cellulose, hydroxypropyl methylcellulose, hydroxyethyl methylcellulose, hydroxypropyl methylcellulose stearoxy ether, carboxymethyl hydroxyethyl cellulose, alkyl hydroxyethyl cellulose, and nonoxynyl hydroxyethyl cellulose.

Examples of anionic cellulosic semi-synthetic polymer compounds that can be used include substitution products obtained by substitution of the non-ionic cellulosic semi-synthetic polymer compounds described above with various derivative groups and salts (sodium salts, ammonium salts, and the like) of these substitution products. Specific examples include sodium cellulose sulfate, methyl cellulose, methyl ethyl cellulose, ethyl cellulose, carboxymethyl cellulose (CMC), and salts thereof.

Examples of cationic cellulosic semi-synthetic polymer compounds that can be used include low nitrogen hydroxyethyl cellulose dimethyldiallyl ammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (poly quaternium-24).

Examples of alginic acid-based semi-synthetic polymer compounds include sodium alginate and propylene glycol alginate.

Examples of microorganism-produced semi-synthetic polymer compounds include chemically modified products of xanthan gum, dehydroxanthan gum, dextran, succinoglucan, pullulan, and the like.

[Synthetic polymer compounds]

A synthetic polymer compound is a polymer compound that is artificially produced through a chemical reaction. Such synthetic polymer compounds can be classified as poly(meth)acrylic acid polymer compounds, poly(meth)acrylic acid ester polymer compounds, polyvinyl polymer compounds, polyurethane polymer compounds, polyether polymer compounds, and so forth.

Examples of poly(meth)acrylic acid polymer compounds include polyacrylic acid, polymethacrylic acid, and salts thereof.

Polyvinyl polymer compounds can be classified as non-ionic, cationic, and zwitterionic.

Examples of non-ionic polyvinyl polymer compounds include polyacrylamide, polyvinyl alcohol, poly(vinyl methyl ether), polyvinyl formamide, polyvinyl acetamide, and polyvinylpyrrolidone.

Examples of cationic polyvinyl polymer compounds include dimethyldiallylammonium chloride/acrylamide (polyquaternium-7), vinylpyrrolidone/N,N-dimethylaminoethylmethacrylic acid copolymer diethyl sulfate salt (polyquaternium-11), acrylamide/$\beta$-methacryloxyethyl trimethyl ammonium copolymer methyl sulfate salt (polyquaternium-5), methylvinylimidazolinium chloride/vinylpyrrolidone copolymer ammonium salt (polyquaternium-16), vinylpyrrolidone/dimethylaminopropyl methacrylamide (polyquaternium-28), vinylpyrrolidone/imidazolinium ammonium (polyquaternium-44), vinylcaprolactam/vinylpyrrolidone/methyl vinylimidazolinium methyl sulfate (polyquaternium-46), N-vinylpyrrolidone/N,N-dimethylaminoethyl methacrylate, and N,N-dimethylaminoethyl methacrylate diethyl sulfate.

Examples of zwitterionic polyvinyl polymer compounds include acrylamide/acrylic acid/dimethyldiallylammonium chloride (polyquaternium-39), dimethyldiallylammonium chloride/acrylic acid (polyquaternium-22), and dimethyldiallylammonium chloride/acrylic acid/acrylamide copolymer.

Examples of polyurethane polymer compounds include anionic polyether polyurethanes, cationic polyether polyurethanes, non-ionic polyether polyurethanes, zwitterionic polyether polyurethanes, anionic polyester polyurethanes, cationic polyester polyurethanes, non-ionic polyester polyurethanes, and zwitterionic polyester polyurethanes.

Examples of polyether polymer compounds include polyethylene glycol, polypropylene glycol, and polyethylene glycol/polypropylene glycol.

Moreover, examples of synthetic polymer compounds that can be used include known synthetically-obtained water-soluble polymers (for example, those described in JP 2013-069672 A, JP 2013-093123 A, JP 2013-206759 A, JP 2013-211161 A, and JP 2015-023015 A) that are used as zwitterionic resin-type dispersants, resin-type dispersants, anionic dispersants, cationic dispersants, and so forth.

One of these water-soluble polymers may be used individually, or two or more of these water-soluble polymers may be used in combination.

The water-soluble polymer is required to (i) disperse a conductive material and an electrode active material and (ii) impart viscosity on a slurry for an electrode as explained above, and is also required to (iii) be stable at high-potential when used in an electrochemical device. In view of the above, it is preferable to use a thickening polysaccharide as the water-soluble polymer. The term "thickening polysaccharide" refers to polysaccharides that can impart viscosity on an aqueous solvent and compounds that are derived from such polysaccharides. For example, the cellulosic semi-synthetic polymer compounds and some of the natural polymer compounds provided above as examples are included among thickening polysaccharides. Preferably the thickening polysaccharide is a cellulosic semi-synthetic polymer compound, wherein the cellulosic semi-synthetic polymer compound is at least one of

(i) a non-ionic cellulosic semi-synthetic polymer compound selected from the group consisting of methyl cellulose, methyl ethyl cellulose, ethyl cellulose, microcrystalline cellulose, hydroxyethyl cellulose, hydroxybutyl methylcellulose, hydroxypropyl cellulose, hydroxypropyl methylcellulose, hydroxyethyl methylcellulose, hydroxypropyl methylcellulose stearoxy ether, carboxymethyl hydroxyethyl cellulose, alkyl hydroxyethyl cellulose, and nonoxynyl hydroxyethyl cellulose;

(ii) an anionic cellulosic semi-synthetic polymer compound selected from the group consisting of sodium cellulose sulfate, salts of methyl cellulose, salts of methyl ethyl cellulose, salts of ethyl cellulose, carboxymethyl cellulose, and salts of carboxymethyl cellulose; and

(iii) a cationic cellulosic semi-synthetic polymer compound selected from the group consisting of low nitrogen hydroxyethyl cellulose dimethyldiallyl ammonium chloride, O-[2-hydroxy-3-(trimethylammonio)propyl]hydroxyethyl cellulose chloride, and O-[2-hydroxy-3-(lauryldimethylammonio)propyl]hydroxyethyl cellulose chloride, and particularly preferably, the thickening polysaccharide is an anionic cellulosic semi-synthetic polymer compound selected from the group consisting of sodium cellulose sulfate, salts of methyl cellulose, salts of methyl ethyl cellulose, salts of ethyl cellulose, carboxymethyl cellulose, and salts of carboxymethyl cellulose, from a viewpoint of increasing conductive material and electrode active material dispersibility, increasing electrochemical device rate characteristics, and further improving electrochemical device high-temperature storage characteristics.

[Properties of water-soluble polymer]

The 1 mass% aqueous solution viscosity (25°C) of the water-soluble polymer is preferably 500 mPa·s or more, and more preferably 1,000 mPa·s or more, and is preferably 8,000 mPa·s or less, more preferably 6,000 mPa·s or less, even more preferably 3,000 mPa·s or less, and particularly preferably 2,100 mPa·s or less. When the 1 mass% aqueous solution viscosity (25°C) of the water-soluble polymer is within any of the ranges set forth above, conductive material and electrode active material dispersibility can be increased. Moreover, electrochemical device rate characteristics can be increased, and electrochemical device high-temperature storage characteristics can be further improved.

The average degree of polymerization of the water-soluble polymer is preferably 500 or more, and more preferably 1,000 or more, and is preferably 2,500 or less, more preferably 2,000 or less, and even more preferably 1,500 or less. When the average degree of polymerization of the water-soluble polymer is within any of the ranges set forth above, conductive material and electrode active material dispersibility can be increased. Moreover, electrode mixed material layer smoothness can be increased, and electrochemical device high-temperature storage characteristics can be further improved.

In this disclosure, the "average degree of polymerization of the water-soluble polymer" can be calculated from the limiting viscosity determined using an Ubbelohde viscometer, and can specifically be calculated by a method described in JP 5434598 B.

In a case in which a cellulosic semi-synthetic polymer compound as described above is used as the water-soluble polymer, the degree of etherification of the cellulosic semi-synthetic polymer compound is preferably 0.5 or more, and more preferably 0.6 or more, and is preferably 1.0 or less, and more preferably 0.8 or less. When the degree of etherification of the cellulosic semi-synthetic polymer compound is 0.5 or more, this ensures an adequate number of substituents, such as carboxymethyl groups, and thereby improves the solubility of the cellulosic semi-synthetic polymer compound in an aqueous solvent. If the solubility of the cellulosic semi-synthetic polymer compound is low, aggregates may be formed due to attraction between cellulosic semi-synthetic polymer compound adsorbed onto the conductive material. However, when the degree of etherification is 0.5 or more, formation of such aggregates can be inhibited, the conductive material can be favorably dispersed in the composition for an electrode, electrode mixed material layer smoothness and electrochemical device rate characteristics can be increased, and electrochemical device high-temperature storage characteristics can be further improved. On the other hand, when the degree of etherification of the cellulosic semi-synthetic polymer compound is 1.0 or less, the number of substituents, such as carboxymethyl groups, is not excessive, and thus solubility of the cellulosic semi-synthetic polymer compound in an aqueous solvent does not become excessively high. If the solubility of the cellulosic semi-synthetic polymer compound is excessively high, mobility of the cellulosic semi-synthetic polymer compound in solvent increases, which may make it harder to achieve adsorption to the conductive material. However, when the degree of etherification is 1.0 or less, the cellulosic semi-synthetic polymer compound can be sufficiently adsorbed by the conductive material to enable favorable dispersion of the conductive material in the composition for an electrode, electrode mixed material layer smoothness and electrochemical device rate characteristics can be increased, and electrochemical device high-temperature storage characteristics can be further improved.

[Amount of water-soluble polymer]

The amount of the water-soluble polymer in the composition for an electrode is preferably at least 10 parts by mass and not more than 4,000 parts by mass per 100 parts by mass of the conductive material. As a result of the amount of the water-soluble polymer being within any of the ranges set forth above, conductive material dispersibility can be sufficiently improved while ensuring battery characteristics, such as rate characteristics, of an obtained electrochemical device.

In a case in which carbon black is used as the conductive material, the amount of the water-soluble polymer in the composition for an electrode per 100 parts by mass of the conductive material is preferably 10 parts by mass or more, more preferably 20 parts by mass or more, and even more preferably 60 parts by mass or more, and is preferably 200 parts by mass or less, more preferably 160 parts by mass or less, and even more preferably 140 parts by mass or less. When the amount of the water-soluble polymer per 100 parts by mass of carbon black is 10 parts by mass or more, dispersibility of the carbon black in the composition for an electrode can be ensured. On the other hand, when the amount of the water-soluble polymer per 100 parts by mass of carbon black is 200 parts by mass or less, a sufficient dispersibility improvement effect that is commensurate with an increase in the amount of the water-soluble polymer can be obtained. Moreover, in an electrochemical device including an electrode that includes an electrode mixed material layer formed using the composition for an electrode, an increase in internal resistance can be suppressed and rate characteristics are not excessively reduced.

In a case in which a fibrous carbon nanomaterial is used as the conductive material, the amount of the water-soluble polymer in the composition for an electrode per 100 parts by mass of the fibrous carbon nanomaterial is preferably 50 parts by mass or more, more preferably 100 parts by mass or more, and even more preferably 150 parts by mass or more, and is preferably 4,000 parts by mass or less, more preferably 2,000 parts by mass or less, and even more preferably 1,000 parts by mass or less. When the amount of the water-soluble polymer per 100 parts by mass of the fibrous carbon nanomaterial is 50 parts by mass or more, dispersibility of the fibrous carbon nanomaterial in the composition for an electrode can be ensured. On the other hand, when the amount of the water-soluble polymer per 100 parts by mass of the fibrous carbon nanomaterial is 4,000 parts by mass or less, a sufficient dispersibility improvement effect that is commensurate with an increase in the amount of the water-soluble polymer can be obtained. Moreover, in an electrochemical device including an electrode that includes an electrode mixed material layer formed using the composition for an electrode, an increase in internal resistance can be suppressed and rate characteristics are not excessively reduced.

<Electrode active material>

Known electrode active materials may be used without any specific limitations. One electrode active material may be used individually, or two or more electrode active materials may be used together in a freely selected ratio.

[Positive electrode active material]

Examples of positive electrode active materials that can be used in a lithium ion secondary battery, for example, include, but are not specifically limited to, lithium-containing cobalt oxide ($LiCoO_2$), lithium manganate ($LiMn_2O_4$), lithium-containing nickel oxide ($LiNiO_2$), lithium-containing composite oxide of Co-Ni-Mn, lithium-containing composite oxide of Ni-Mn-Al, lithium-containing composite oxide of Ni-Co-Al, olivine-type lithium iron phosphate ($LiFePO_4$), olivine-type manganese lithium phosphate ($LiMnPO_4$), lithium rich spinel compounds represented by $Li_{1-x}Mn_{2-x}O_4$ (0 < x < 2), $Li[Ni_{0.17}Li_{01.2}Co_{0.07}Mn_{0.56}]O_2$, and $LiNi_{0.5}Mn_{1.5}O_4$. Of these examples, lithium-containing cobalt oxide ($LiCoO_2$), lithium-containing nickel oxide ($LiNiO_2$), lithium-containing composite oxide of Co-Ni-Mn, lithium-containing composite oxide of Ni-Co-Al, $Li[Ni_{0.17}Li_{0.2}Co_{0.07}Mn_{0.56}]O_2$, or $LiNi_{0.5}Mn_{1.5}O_4$ is preferable as the positive electrode active material from a viewpoint of improving battery capacity and the like.
Examples of positive electrode active materials that can be used in a lithium ion capacitor or an electric double-layer capacitor, for example, include, but are not specifically limited to, carbon allotropes. Specific examples of carbon allotropes that may be used include activated carbon, polyacene, carbon whisker, and graphite. Moreover, powder or fiber of such carbon allotropes may be used.
The particle diameter of the positive electrode active material is not specifically limited and may be the same as that of conventionally-used positive electrode active materials.

[Negative electrode active material]

Examples of negative electrode active materials that can be used in a lithium ion secondary battery, for example, include, but are not specifically limited to, a carbon-based negative electrode active material, a metal-based negative electrode active material, and a negative electrode active material formed by combining these materials.
The carbon-based negative electrode active material can be defined as an active material that contains carbon as its main framework and into which lithium can be inserted (also referred to as "doping"). Examples of the carbon-based negative electrode active material include carbonaceous materials and graphitic materials.
Examples of carbonaceous materials include graphitizing carbon and non-graphitizing carbon typified by glassy carbon, which has a structure similar to an amorphous structure.
The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.
Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.
Examples of graphitic materials include natural graphite and artificial graphite.
Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher. In this disclosure, natural graphite whose surface is at least partially coated with amorphous carbon (amorphous-coated natural graphite) may be used as the carbon-based negative electrode active material.
The metal-based negative electrode active material is an active material that contains metal, the structure of which usually contains an element that allows insertion of lithium, and that exhibits a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. The use of a silicon-based negative electrode active material enables an increase in the capacity of a lithium ion secondary battery.
Examples of silicon-based negative electrode active materials include silicon (Si), a silicon-containing alloy, SiO, $SiO_x$, and a composite material of conductive carbon and a Si-containing material obtained by coating or combining the Si-containing material with the conductive carbon.
Although no specific limitations are placed on the BET specific surface area of the negative electrode active material, the BET specific surface area is normally approximately at least 1 $m^2$/g and not more than 20 $m^2$/g.

Note that no specific limitations are placed on the mixing ratio of the electrode active material and other components in the disclosed, however not claimed, composition for an electrode containing an electrode active material. For example, the composition for an electrode preferably contains at least 0.1 parts by mass and not more than 5 parts by mass of the conductive material per 100 parts by mass of the electrode active material. Moreover, the composition for an electrode preferably contains at least 0.1 parts by mass and not more than 10 parts by mass of the water-soluble polymer per 100 parts by mass of the electrode active material. Furthermore, the composition for an electrode preferably contains at least 0.1 parts by mass and not more than 100 parts by mass of the particulate polymer per 100 parts by mass of the electrode active material.

In the case of a negative electrode active material used in a lithium ion capacitor, for example, any of the examples of materials that can be used as a negative electrode active material in a lithium ion secondary battery may be used.

Moreover, in the case of a negative electrode active material used in an electric double-layer capacitor, for example, a carbon allotrope of the same type as the positive electrode active material may be used.

<Aqueous solvent>

The aqueous solvent contained in the composition for an electrode is not specifically limited and may be water used individually or a mixed solvent of water and another solvent. The aqueous solvent contained in the composition for an electrode may include solvent used in production of the above-described particulate polymer and water-soluble polymer.

<Other components>

Besides the components set forth above, components such as crosslinking agents, reinforcers, antioxidants, dispersants (excluding those corresponding to the above-described water-soluble polymer), and electrolysis solution additives that function to inhibit electrolysis solution decomposition may be mixed into the presently disclosed composition for an electrode. These other components may be commonly known components. One of these other components may be used individually, or two or more of these other components may be used in combination in a freely selected ratio.

(Production method of composition for electrochemical device electrode)

The presently disclosed (claimed or not claimed) composition for an electrochemical device electrode can be produced by mixing a conductive material, a particulate polymer including a polar group-containing monomer unit, a water-soluble polymer, and an aqueous solvent, with optional addition of an electrode active material and other components. In other words, the composition for an electrochemical device electrode can be produced by dissolving or dispersing, in an aqueous solvent, a conductive material, a particulate polymer including a polar group-containing monomer unit, and a water-soluble polymer, with optional addition of an electrode active material and other components. The mixing method used to obtain the composition for an electrode is not specifically limited and may involve using a normal mixer such as a disper blade, a mill, or a kneader.

<Production method of conductive material paste for electrochemical device electrode>

In a case in which the composition for an electrochemical device electrode is a conductive material paste for an electrochemical device electrode as presently claimed, it is preferable that the conductive material paste is produced through a step (1-1) of mixing a conductive material, a water-soluble polymer, and water to obtain a conductive material dispersion liquid and a step (1-2) of mixing the conductive material dispersion liquid and a particulate polymer including a polar group-containing monomer unit. When the conductive material paste is produced in this manner by first dispersing and/or dissolving the conductive material and the water-soluble polymer in an aqueous solvent to produce a conductive material dispersion liquid and then adding the particulate polymer to the conductive material dispersion liquid, the water-soluble polymer and the particulate polymer can be adsorbed by the conductive material to an appropriate and sufficient degree. Consequently, when an electrode active material is added to the conductive material paste and a resultant slurry for an electrode is used, even a conductive material such as a fibrous carbon nanomaterial that normally tends to aggregate can be favorably dispersed and an electrode can be produced that enables an electrochemical device to display excellent battery characteristics (for example, high-temperature storage characteristics and rate characteristics).

<Production method of slurry for electrochemical device electrode>

In a case in which the composition for an electrochemical device electrode is a slurry for an electrochemical device electrode as disclosed herein without being claimed, it is preferable that the slurry for an electrode is produced through a step (1-1) of mixing a conductive material, a water-soluble polymer, and water to obtain a conductive material dispersion liquid and a step (1-2) of mixing the conductive material dispersion liquid, a particulate polymer including a polar group-containing monomer unit, and an electrode active material. When the slurry for an electrode is produced in this manner by first dispersing and/or dissolving the conductive material and the water-soluble polymer in an aqueous solvent to produce a conductive material dispersion liquid and then adding the particulate polymer and the electrode active material to the conductive material dispersion liquid, the water-soluble polymer and the particulate polymer (particularly the water-soluble polymer) are adsorbed by the conductive material to an appropriate and sufficient degree. Consequently, when the slurry for an electrode is used, even a conductive material such as a fibrous carbon nanomaterial that normally tends to aggregate can be favorably dispersed and an electrode can be produced that enables an electrochemical device to display excellent battery characteristics (for example, high-temperature storage characteristics and rate characteristics).

Note that in step (1-2), the particulate polymer and the electrode active material may be added to the conductive material dispersion liquid at the same time or may be added separately. For example, the slurry for an electrode may be obtained by mixing the conductive material dispersion liquid and the electrode active material, subsequently adding the particulate polymer to the resultant mixture, and then performing mixing again.

In a case in which the composition for an electrochemical device electrode is a slurry for an electrochemical device electrode as disclosed herein without being claimed, the slurry for an electrode is preferably produced by mixing at least an electrode active material and a conductive material paste for an electrochemical device electrode. More specifically, it is preferable that the slurry for an electrochemical device electrode is produced through a step (II-1) of mixing a conductive material, a particulate polymer including a polar group-containing monomer unit, a water-soluble polymer, and water to obtain a preliminary mixture (conductive material paste) and a step (II-2) of mixing the preliminary mixture and an electrode active material. As a result of the conductive material, the particulate polymer, and the water-soluble polymer being mixed in an aqueous solvent in advance, prior to addition of the electrode active material, this production procedure enables appropriate and sufficient adsorption of the particulate polymer and the water-soluble polymer by the conductive material. Consequently, when the slurry for an electrode is used, even a conductive material such as a fibrous carbon nanomaterial that normally tends to aggregate can be favorably dispersed and an electrode can be produced that enables an electrochemical device to display excellent battery characteristics (for example, high-temperature storage characteristics and rate characteristics).

(Electrode for electrochemical device)

The presently disclosed electrode for an electrochemical device can be produced using the slurry for an electrochemical device electrode. The presently disclosed electrode for an electrochemical device includes a current collector and an electrode mixed material layer formed on the current collector. The electrode mixed material layer is normally a dried product of the slurry for an electrode. The electrode mixed material layer contains at least an electrode active material, a conductive material, a polymer derived from a particulate polymer including a polar group-containing monomer unit, and a water-soluble polymer. Note that components contained in the electrode mixed material layer are components that were contained in the presently disclosed composition for an electrochemical device electrode (slurry for an electrode) and the preferred ratio of these components in the electrode mixed material layer is also the same as the preferred ratio of these components in the presently disclosed composition for an electrode. Moreover, although the particulate polymer is present in particulate form in the composition for an electrochemical device electrode, the particulate polymer may be present in a particulate form or any other form in the electrode mixed material layer formed using the slurry for an electrode.

The electrode mixed material layer formed using the presently disclosed composition for an electrode has a good conduction path and excellent smoothness, and can strongly adhere to the current collector. Accordingly, an electrochemical device that includes the presently disclosed electrode for an electrochemical device including the above-described electrode mixed material layer has excellent battery characteristics such as high-temperature storage characteristics.

<Production method of electrode for electrochemical device>

The electrode for an electrochemical device is produced, for example, through a step of applying the slurry for an electrode onto at least one side of a current collector (application step) and a step of drying the slurry for an electrode that has been applied onto at least one side of the current collector to form an electrode mixed material layer on the current collector (drying step). The presently disclosed electrode for an electrochemical device can also be produced by a method in which dry granulation of the above-described slurry for an electrode is performed to produce composite particles and then these composite particles are used to form an electrode mixed material layer on a current collector.

[Application step]

The method by which the slurry for an electrode is applied onto the current collector is not specifically limited and may be a commonly known method. Specific examples of application methods that can be used include doctor blading, dip coating, reverse roll coating, direct roll coating, gravure coating, extrusion coating, and brush coating. In the application, the slurry for an electrode may be applied onto just one side of the current collector or may be applied onto both sides of the current collector. The thickness of the slurry coating on the current collector after application but before drying may be set as appropriate in accordance with the thickness of the electrode mixed material layer to be obtained after drying.

The current collector onto which the slurry for an electrode is applied is a material having electrical conductivity and electrochemical durability. Specifically, the current collector may be made of, for example, iron, copper, aluminum, nickel, stainless steel, titanium, tantalum, gold, or platinum. Of such current collectors, aluminum foil is particularly preferable as a current collector used in a positive electrode and copper foil is particularly preferable as a current collector used in a negative electrode. One of these materials may be used individually, or two or more of these materials may be used in combination in a freely selected ratio.

[Drying step]

The slurry for an electrode on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry for an electrode on the current collector as described above, an electrode mixed material layer is formed on the current collector, thereby providing an electrode for an electrochemical device that includes the current collector and the electrode mixed material layer.

After the drying step, the electrode mixed material layer may be further subjected to pressure treatment, such as mold pressing or roll pressing. The pressure treatment can improve close adherence between the electrode mixed material layer and the current collector.

Furthermore, when the electrode mixed material layer contains a curable polymer, the polymer is preferably cured after the electrode mixed material layer has been formed.

(Electrochemical device)

The presently disclosed electrochemical device may be, but is not specifically limited to, a lithium ion secondary battery, a lithium ion capacitor, or an electric double-layer capacitor, and is preferably a lithium ion secondary battery. The presently disclosed electrochemical device includes the presently disclosed electrode for an electrochemical device. This electrochemical device has excellent battery characteristics such as high-temperature storage characteristics.

The following describes the configuration of a lithium ion secondary battery as one example of the presently disclosed electrochemical device. The lithium ion secondary battery normally includes a positive electrode, a negative electrode, an electrolysis solution, and a separator, wherein either or both of the positive electrode and the negative electrode are the presently disclosed electrode for an electrochemical device.

<Electrodes>

A commonly known electrode may be used as an electrode other than the presently disclosed electrode for an electrochemical device. Specifically, an electrode obtained by forming an electrode mixed material layer on a current collector may be used as such an electrode.

<Electrolysis solution>

The electrolysis solution is normally an organic electrolysis solution obtained by dissolving a supporting electrolyte in an organic solvent. The supporting electrolyte may, for example, be a lithium salt. Examples of the lithium salt include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_sSO_2)NLi$. Of these lithium salts, $LiPF_6$, $LiClO_4$, and $CF_3SO_3Li$ are preferable because they readily dissolve in solvents and exhibit a high degree of dissociation, and $LiPF_6$ is particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolysis solution is not specifically limited so long as the supporting electrolyte dissolves therein. Suitable examples include carbonates such as dimethyl carbonate (DMC), ethylene carbonate (EC), diethyl carbonate (DEC), propylene carbonate (PC), butylene carbonate (BC), ethyl methyl carbonate (EMC); esters such as γ-butyrolactone and methyl formate; ethers such as 1,2-dimethoxyethane and tetrahydrofuran; and sulfurcontaining compounds such as sulfolane and dimethyl sulfoxide. Furthermore, a mixed liquid of such solvents may be used. Of these solvents, carbonates are preferable for their high dielectric constant and broad stable potential region, and a mixture of ethylene carbonate and ethyl methyl carbonate is more preferable.

The concentration of the electrolyte in the electrolysis solution can be adjusted as appropriate and may, for example, be preferably 0.5 mass% to 15 mass%, more preferably 2 mass% to 13 mass%, and even more preferably 5 mass% to 10 mass%. Known additives such as fluoroethylene carbonate, ethyl methyl sulfone, and vinylene carbonate may be added to the electrolysis solution.

<Separator>

Examples of separators that can be used include, but are not specifically limited to, those described in JP 2012-204303 A. Of these separators, a fine porous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the capacity per volume.

<Production method of lithium ion secondary battery>

The lithium ion secondary battery according to this disclosure may be produced, for example, by stacking the positive electrode and the negative electrode with the separator in-between, rolling or folding the resultant stack as necessary in accordance with the battery shape to place the stack in a battery container, injecting the electrolysis solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of this disclosure based on examples. Embodiments which are not within the scope of the appended claims are disclosed as reference examples. In the following description, "%" and "parts" used to express quantities are by mass, unless otherwise specified.

Moreover, in the case of a polymer that is produced through copolymerization of a plurality of types of monomers, the proportion constituted by a monomer unit in the polymer that is formed through polymerization of a given monomer is normally, unless otherwise specified, the same as the ratio (charging ratio) of the given monomer among all monomers used in polymerization of the polymer.

The following methods were used in the examples and comparative examples to evaluate the 1 mass% aqueous solution viscosity at 25°C and degree of etherification of a water-soluble polymer, the dispersed particle diameter and preservation stability of a conductive material paste (composition for an electrode), the smoothness of a positive electrode mixed material layer, the adherence strength of a positive electrode mixed material layer to a current collector, the adherence strength retention rate of a positive electrode mixed material layer after high-temperature storage, and the rate characteristics and high-temperature storage characteristics of a lithium ion secondary battery.

<1 Mass% aqueous solution viscosity (25°C)>

An aqueous solution of a water-soluble polymer having a concentration of 1 mass% was prepared and the viscosity of this aqueous solution was measured using a B-type viscometer under conditions of a temperature of 25°C and a rotor rotation speed of 60 rpm.

<Degree of etherification>

The degree of etherification (degree of substitution) is a value determined by the following method.

First, 0.5 g to 0.7 g of a sample (cellulosic semi-synthetic polymer compound) was precisely weighed and was incinerated in a porcelain crucible. After cooling, 500 mL of the resultant incinerated product was transferred to a beaker. Approximately 250 mL of water was added to the beaker and 35 mL of N/10 sulfuric acid was added to the beaker using a pipette. The contents of the beaker were boiled for 30 minutes. After cooling, phenolphthalein indicator was added, and then back titration of the excess acid was performed using N/10 potassium hydroxide and the degree of substitution was calculated by the following formulae.

$$A = (a \times f - b \times f^1)/Sample\ (g) - Alkalinity\ (or + acidity)$$

$$Degree\ of\ substitution = M \times A/(10{,}000 - 80A)$$

A: Amount (mL) of N/10 sulfuric acid consumed by bound alkali metal ions in 1 g of sample
a: Used amount (mL) of N/10 sulfuric acid
f: Titer coefficient of N/10 sulfuric acid
b: Titration amount (mL) of N/10 potassium hydroxide
$f^1$: Titer coefficient of N/10 potassium hydroxide
M: Weight average molecular weight of sample
Note that the alkalinity (or acidity) was determined by the following method and formula.

Approximately 1 g of the sample was dissolved in 200 mL of water, 5 mL of N/10 sulfuric acid was added thereto, and then boiling was performed for 10 minutes. After subsequent cooling, phenolphthalein indicator was added and titration with N/10 potassium hydroxide was performed. The titration amount in this titration was taken to be S mL. A blank test was performed at the same time and the titration amount therein was taken to be B mL. The alkalinity (or acidity) was determined from the following formula. Note that when (B - S) $\times$ f had a positive value, the alkalinity was obtained, and when (B - S) $\times$ f had a negative value, the acidity was obtained.

$$Alkalinity\ (acidity) = (B - S) \times f/Sample\ (g)$$

f: Titer coefficient of N/10 potassium hydroxide

<Dispersed particle diameter>

A laser diffraction particle size distribution analyzer was used to measure the dispersed particle diameter of particles in a conductive material paste after the conductive material paste had been left at rest. The volume-average particle diameter (D50) was determined and the dispersibility of a fibrous carbon nanomaterial (conductive material) in the conductive material paste was evaluated by the following criteria. A smaller volume-average particle diameter indicates fewer aggregates and better dispersion of the fibrous carbon nanomaterial in the conductive material paste.

A: Volume-average particle diameter of less than 2 $\mu$m
B: Volume-average particle diameter of at least 2 $\mu$m and less than 5 $\mu$m
C: Volume-average particle diameter of at least 5 $\mu$m and less than 8 $\mu$m
D: Volume-average particle diameter of at least 8 $\mu$m and less than 10 $\mu$m
E: Volume-average particle diameter of 10 $\mu$m or more

<Preservation stability>

The viscosity $\eta1$ of a conductive material paste straight after production was measured using a B-type viscometer under conditions of a temperature of 25°C and a rotor rotation speed of 60 rpm. Next, the conductive material paste was stored for 30 days at an ambient temperature of 25°C and then the viscosity $\eta2$ thereof was measured in the same way as described for $\eta1$ to determine the viscosity change $\Delta\eta$ (%) = ($|\eta1 - \eta2|/\eta1$) $\times$ 100. The preservation stability of the conductive material paste was evaluated by the following criteria. A smaller viscosity change $\Delta\eta$ indicates that the viscosity of the conductive material paste is stable and that a better dispersion state of a fibrous carbon nanomaterial (conductive material) in the conductive material paste is maintained.

A: Viscosity change $\Delta\eta$ of less than 5%
B: Viscosity change $\Delta\eta$ of at least 5% and less than 10%
C: Viscosity change $\Delta\eta$ of at least 10% and less than 20%
D: Viscosity change $\Delta\eta$ of at least 20% and less than 30%
E: Viscosity change $\Delta\eta$ of 30% or more

<Smoothness>

A produced positive electrode was cut out to 3 cm × 3 cm in size to obtain a test piece. The test piece was set in a laser microscope with a current collector side of the test piece at the bottom. The arithmetic average roughness Ra value of five random locations on the positive electrode mixed material layer was measured in a range of 100 μm × 100 μm using a ×50 lens in accordance with JIS B 0601:2001 (ISO 4287:1997). This measurement was performed with respect to 10 test pieces and the average value (average Ra value) of all measured values (5 locations × 10 pieces) was calculated. Conversion to an index value (Ra relative value) was performed by taking the average Ra value in Example 1 to be 100. The Ra relative value was evaluated by the following criteria. A smaller value indicates better positive electrode mixed material layer smoothness.

A: Ra relative value of 100 or less
B: Ra relative value of more than 100 and not more than 200
C: Ra relative value of more than 200 and not more than 500
D: Ra relative value of more than 500

<Adherence strength of positive electrode mixed material layer to current collector>

A produced positive electrode was cut out as a rectangular shape of 1 cm in width by 10 cm in length to obtain a test piece. The test piece was fixed with the surface at a positive electrode mixed material layer side of the test piece on top. Cellophane tape (tape prescribed by JIS Z1522) was attached to the surface at the positive electrode mixed material layer side of the test piece. The cellophane tape was subsequently peeled off from one end of the test piece at a speed of 50 mm/minute and in a direction at 180°, and the stress during this peeling was measured. This measurement was performed 10 times and the average value of these measurements (average peel strength PO) was calculated. Conversion to an index value (PO relative value) was performed by taking the average peel strength PO in Example 1 to be 100. The PO relative value was evaluated by the following criteria. A larger value indicates higher adherence strength of the positive electrode mixed material layer to the current collector in production of the positive electrode (prior to immersion in electrolysis solution) and strong adhesion between the positive electrode mixed material layer and the current collector.

A: PO relative value of 100 or more
B: PO relative value of at least 80 and less than 100
C: PO relative value of at least 60 and less than 80
D: PO relative value of at least 40 and less than 60
E: PO relative value of less than 40

<Adherence strength retention rate after high-temperature storage>

A produced positive electrode was cut out as a rectangular shape of 1 cm in width by 10 cm in length to obtain a test piece. The test piece was fixed with the surface at a positive electrode mixed material layer side of the test piece on top. Cellophane tape (tape prescribed by JIS Z1522) was attached to the surface at the positive electrode mixed material layer side of the test piece. The cellophane tape was subsequently peeled off from one end of the test piece at a speed of 50 mm/minute and in a direction at 180°, and the stress during this peeling was measured. This measurement was performed 10 times and the average value of these measurements was determined as the initial peel strength P0.
Separately to the operation described above, a produced lithium ion secondary battery was charged to a cell voltage of 4.2 V by a 0.5C constant-current method at an ambient temperature of 25°C and was then stored for 3 weeks at an ambient temperature of 60°C (high-temperature storage). After high-temperature storage, the cell was disassembled to remove the positive electrode, which was then washed with an electrolysis solution solvent (mixed solvent of ethylene carbonate (EC) and ethyl methyl carbonate (EMC) (EC/EMC = 3/7 (volume ratio))) and subsequently dried. Next, the positive electrode was cut out as a rectangular shape of 1 cm in width by 10 cm in length to obtain a test piece. This test piece was used to determine the peel strength P1 after high-temperature storage in the same way as the initial peel strength P0.
The adherence strength retention rate (%) (= (peel strength P1/peel strength PO) × 100) was determined and was evaluated by the following criteria. A larger adherence strength retention rate indicates that the positive electrode mixed material layer can maintain an adequate close adherence state with the current collector when subjected to high-temperature storage and that the positive electrode mixed material layer and the current collector are strongly adhered.

A: Adherence strength retention rate of 80% or more

B: Adherence strength retention rate of at least 70% and less than 80%
C: Adherence strength retention rate of at least 60% and less than 70%
D: Adherence strength retention rate of at least 50% and less than 60%
E: Adherence strength retention rate of less than 50%

<Rate characteristics>

A produced lithium ion secondary battery was charged to a cell voltage of 4.2 V by a 0.5C constant-current method at an ambient temperature of 25°C. The lithium ion secondary battery was subsequently discharged to 3.0 V and the initial discharge capacity CO was measured.

The lithium ion secondary battery for which the initial discharge capacity had been measured was then constant-current charged to a cell voltage of 4.2 V at 0.2C and an ambient temperature of 25°C, and was constant-voltage charged at a voltage of 4.2 V until the charging current was 0.02C. Next, the lithium ion secondary battery was constant-current discharged to a cell voltage of 3.0 V at 3C and the 3C capacity was obtained. A value of {(3C capacity)/(initial capacity)} × 100(%) was taken to be a rate characteristic (output characteristic). Evaluation was performed by the following criteria.

A: Rate characteristic of 85% or more
B: Rate characteristic of at least 80% and less than 85%
C: Rate characteristic of at least 70% and less than 80%
D: Rate characteristic of at least 65% and less than 70%
E: Rate characteristic of less than 65%

<High-temperature storage characteristics>

A produced lithium ion secondary battery was charged to a cell voltage of 4.2 V by a 0.5C constant-current method at an ambient temperature of 25°C. The lithium ion secondary battery was subsequently discharged to 3.0 V and the initial discharge capacity CO was measured. Next, the lithium ion secondary battery was charged to a cell voltage of 4.2 V by a 0.5C constant-current method at an ambient temperature of 25°C. Thereafter, the lithium ion secondary battery was stored for 3 weeks at an ambient temperature of 60°C (high-temperature storage). After high-temperature storage, the lithium ion secondary battery was discharged to 3 V by a 0.5C constant-current method and the remaining capacity C1 after high-temperature storage was measured.

The capacity retention rate (%) (= (remaining capacity C1/initial discharge capacity CO) × 100) was determined and was evaluated by the following criteria. A larger capacity retention rate indicates that the lithium ion secondary battery has better high-temperature storage characteristics.

A: Capacity retention rate of 90% or more
B: Capacity retention rate of at least 85% and less than 90%
C: Capacity retention rate of at least 80% and less than 85%
D: Capacity retention rate of at least 75% and less than 80%
E: Capacity retention rate of less than 75%

(Example 1-1)

<Production of particulate polymer>

A reaction vessel equipped with a stirrer was charged with 70 parts of deionized water, 0.2 parts of sodium dodecylbenzenesulfonate as an emulsifier, and 0.3 parts of potassium persulfate as a polymerization initiator. The gas phase of the reaction vessel was purged with nitrogen gas and heating was performed to 60°C. In a separate vessel, a monomer mixture was obtained by mixing 50 parts of deionized water, 0.5 parts of sodium dodecylbenzenesulfonate as an emulsifier, 4 parts of methacrylic acid as a hydrophilic group-containing monomer, 15 parts of acrylonitrile as a nitrile group-containing monomer, and 81 parts of ethyl acrylate as a (meth)acrylic acid ester monomer. The monomer mixture was continuously added to the reaction vessel over 4 hours to perform polymerization. During addition of the monomer mixture, the reaction was carried out at 60°C. Once the addition of the monomer mixture was completed, further stirring was performed for 3 hours at 70°C to complete the reaction. The polymerization conversion rate was at least 99.5%. The resultant polymerization reaction liquid was cooled to 25°C and was then adjusted to pH 7 through addition of ammonia water. Thereafter, steam was introduced to remove unreacted monomers and obtain a water dispersion of a particulate polymer (solid content concentration: 40%). The volume-average particle diameter of the particulate polymer was 0.2 μm .

<Production of conductive material paste>

A conductive material paste was obtained by mixing 100 parts of acetylene black (BET specific surface area: 68 $m^2$/g, average particle diameter: 35 nm, density: 0.04 g/$cm^3$) as a conductive material, 50 parts by solid content equivalents of the water dispersion of the particulate polymer described above, and 100 parts by solid content equivalents of an aqueous solution of a sodium salt of carboxymethyl cellulose (average degree of polymerization: 1,000 to 1,200, degree of etherification: 0.65 to 0.75, 1 mass% aqueous solution viscosity (25°C): 1,400 mPa·s) as a water-soluble polymer, and subsequently adding an appropriate amount of water and performing dispersing using a bead mill. The resultant conductive material paste had a solid content concentration of 15 mass%.

<Production of slurry for positive electrode>

A slurry for a positive electrode was produced by adding 100 parts of an active material (LiCoO$_2$) having a layered structure (volume-average particle diameter: 10 $\mu$m) as a positive electrode active material and an appropriate amount of water to the conductive material paste (2 parts of conductive material) obtained as described above, and performing stirring using a disper blade (3,000 rpm, 60 minutes). The resultant slurry for a positive electrode had a solid content concentration of 50 mass%.

<Production of positive electrode>

Aluminum foil of 20 $\mu$m in thickness was prepared as a current collector. The slurry for a positive electrode obtained as described above was applied onto the aluminum foil using a comma coater such as to have a coating weight after drying of 20 mg/$cm^2$. The applied slurry for a positive electrode was dried for 20 minutes at 60°C and 20 minutes at 120°C, and was subsequently heat treated for 10 hours at 60°C to obtain a positive electrode web. The positive electrode web was rolled by roll pressing to produce a positive electrode including the aluminum foil and a positive electrode mixed material layer having a density of 3.2 g/$cm^3$. The thickness of the positive electrode was 70 $\mu$m. The obtained positive electrode was used to evaluate smoothness and adherence strength. The results are shown in Table 1.

<Production of slurry for negative electrode>

A planetary mixer equipped with a disper blade was charged with 100 parts of artificial graphite (volume-average particle diameter: 24.5 $\mu$m) having a specific surface area of 4 $m^2$/g as a negative electrode active material and 1 part by solid content equivalents of a 1% aqueous solution of carboxymethyl cellulose (BSH-12 produced by DKS Co., Ltd.) as a dispersant, the solid content concentration was adjusted to 55% with deionized water, and then mixing was performed for 60 minutes at 25°C. Next, the solid content concentration was adjusted to 52% with deionized water. Further mixing was performed for 15 minutes at 25°C to yield a mixed liquid.
Next, 1.0 parts by solid content equivalents of a 40% water dispersion of a styrene-butadiene copolymer (glass transition temperature: -15°C) and deionized water were added to the mixed liquid obtained as described above to adjust the final solid content concentration to 50%, and mixing was performed for a further 10 minutes. The resultant mixed liquid was subjected to a defoaming process under reduced pressure to yield a slurry for a negative electrode having good fluidity.

<Production of negative electrode>

A comma coater was used to apply the slurry for a negative electrode onto copper foil (current collector) of 20 $\mu$m in thickness such as to have a thickness of approximately 150 $\mu$m after drying. The applied slurry for a negative electrode was dried by conveying the copper foil inside a 60°C oven for 2 minutes at a speed of 0.5 m/minute. Heat treatment was subsequently performed for 2 minutes at 120°C to obtain a negative electrode web. The negative electrode web was rolled by roll pressing to obtain a negative electrode including a negative electrode mixed material layer (thickness: 80 $\mu$m).

<Preparation of separator>

A single-layer separator made of polypropylene (width: 65 mm, length: 500 mm, thickness: 25 $\mu$m, produced by a dry method, porosity: 55%) was cut out as a 5 cm × 5 cm square.

<Production of lithium ion secondary battery>

An aluminum packing case was prepared as a battery case. The positive electrode obtained as described above was cut out as a 4 cm × 4 cm square and was positioned such that a surface at the current collector side of the positive electrode was in contact with the aluminum packing case. The square separator obtained as described above was positioned on the surface of the positive electrode mixed material layer of the positive electrode. The negative electrode obtained as described above was cut out as a 4.2 cm × 4.2 cm square, and the cut-out negative electrode was positioned on the separator such that a surface at the negative electrode mixed material layer side of the negative electrode was facing the separator. The aluminum packing case was filled with a $LiPF_6$ solution of 1.0 M in concentration that contained 1.5% of vinylene carbonate (VC). The solvent of the $LiPF_6$ solution was a mixed solvent of ethylene carbonate (EC) and ethyl methyl carbonate (EMC) (EC/EMC = 3/7 (volume ratio)). The aluminum packing case was then closed by heat sealing at 150°C to tightly seal an opening of the aluminum packing case, and thereby produce a lithium ion secondary battery. The produced lithium ion secondary battery was used to evaluate high-temperature storage characteristics. The results are shown in Table 1.

(Examples 1-2 to 1-7)

In each example, a particulate polymer was produced in the same way as in Example 1-1 with the exception that the monomers shown in Table 1 were used in the proportions shown in Table 1. Moreover, a conductive material paste, a slurry for a positive electrode, a positive electrode, a negative electrode, and a lithium ion secondary battery were produced and evaluations were performed in the same way as in Example 1-1 with the exception that this particulate polymer was used. The results are shown in Table 1.

(Example 1-8)

A conductive material paste and a slurry for a positive electrode were produced as described below. Moreover, a positive electrode, a negative electrode, and a lithium ion secondary battery were produced and evaluations were performed in the same way as in Example 1-1 with the exception that the obtained slurry for a positive electrode was used. The results are shown in Table 1.

<Production of conductive material paste>

A conductive material paste was obtained by mixing 10 parts of carbon nanotubes (produced by CNano, product name: FloTube 9110, average diameter: 10 nm, average length: 10 $\mu$m, BET specific surface area: 200 $m^2$/g) as a conductive material, 50 parts by solid content equivalents of the water dispersion of the particulate polymer described above, and 100 parts by solid content equivalents of an aqueous solution of a sodium salt of carboxymethyl cellulose (average degree of polymerization: 1,000 to 1,200, degree of etherification: 0.65 to 0.75, 1 mass% aqueous solution viscosity (25°C): 1,400 mPa·s) as a water-soluble polymer, and subsequently adding an appropriate amount of water and performing dispersing using a bead mill. The resultant conductive material paste had a solid content concentration of 15 mass%.

<Production of slurry for positive electrode>

A slurry for a positive electrode was produced by adding 100 parts of an active material ($LiCoO_2$) having a layered structure (volume-average particle diameter: 10 $\mu$m) as a positive electrode active material and an appropriate amount of water to the conductive material paste (0.2 parts of conductive material) obtained as described above, and performing stirring using a disper blade (3,000 rpm, 60 minutes). The resultant slurry for a positive electrode had a solid content concentration of 50 mass%.

(Example 1-9)

A conductive material paste, a slurry for a positive electrode, a positive electrode, a negative electrode, and a lithium ion secondary battery were produced and evaluations were performed in the same way as in Example 1-8 with the exception that carbon nanotubes having a BET specific surface area of 80 $m^2$/g were used as the conductive material. The results are shown in Table 1.

(Example 1-10)

A conductive material paste, a slurry for a positive electrode, a positive electrode, a negative electrode, and a lithium ion secondary battery were produced and evaluations were performed in the same way as in Example 1-8 with the exception that carbon nanotubes (multi-walled carbon nanotubes) having a BET specific surface area of 450 $m^2$/g were used as the conductive material. The results are shown in Table 1.

(Comparative Example 1-1)

A conductive material paste, a slurry for a positive electrode, a positive electrode, a negative electrode, and a lithium ion secondary battery were produced and evaluations were performed in the same way as in Example 1-1 with the exception that a styrene-butadiene copolymer (percentage content of polar group-containing monomer unit: 0%) was used as the particulate polymer. The results are shown in Table 1.

(Comparative Example 1-2)

A conductive material paste, a slurry for a positive electrode, a positive electrode, a negative electrode, and a lithium ion secondary battery were produced and evaluations were performed in the same way as in Example 1-1 with the exception that a particulate polymer was not used. The results are shown in Table 1.

In Table 1, shown below:

"AcB" indicates acetylene black;
"CNT" indicates carbon nanotubes;
"AN" indicates acrylonitrile;
"EA" indicates ethyl acrylate;
"BA" indicates n-butyl acrylate;
"2-EHA" indicates 2-ethylhexyl acrylate;
"MAA" indicates methacrylic acid;
"AA" indicates acrylic acid;
"AMPS" indicates 2-acrylamido-2-methylpropane sulfonic acid;
"2-HEA" indicates 2-hydroxyethyl acrylate;
"SBR" indicates styrene-butadiene copolymer; and
"CMC-Na" indicates sodium salt of carboxymethyl cellulose.

Table 1

| | | Example 1-1 | Example 1-2 | Example 1-3 | Example 1-4 | Example 1-5 | Example 1-6 | Example 1-7 | Example 1-8 | Example 1-9 | Example 1-10 | Comparative Example 1-1 | Comparative Example 1-2 |
|---|---|---|---|---|---|---|---|---|---|---|---|---|---|
| Conductive material | Type | AcB | AcB | AcB | AcB | AcB | AcB | AcB | CNT | CNT | CNT | AcB | AcB |
| | Average particle diameter [nm] | 35 | 35 | 35 | 35 | 35 | 35 | 35 | - | - | - | 35 | 35 |
| | BET specific surface area [m²/g] | 68 | 68 | 68 | 68 | 68 | 68 | 68 | 200 | 80 | 450 | 68 | 68 |
| | Density [g/cm³] | 0.04 | 0.04 | 0.04 | 0.04 | 0.04 | 0.04 | 0.04 | - | - | - | 0.04 | 0.04 |
| | Amount [parts by mass] | 100 | 100 | 100 | 100 | 100 | 100 | 100 | 10 | 10 | 10 | 100 | 100 |
| Particulate polymer — Monomer composition [mass%] | Nitrile group-containing monomer — AN | 15 | 15 | 15 | 15 | 15 | 15 | 20 | 15 | 15 | 15 | SBR | None |
| | (Meth)acrylic acid ester monomer — EA | 81 | - | | - | - | | - | 81 | 81 | 81 | | |
| | (Meth)acrylic acid ester monomer — BA | - | - | - | - | - | 81 | - | - | - | - | | |
| | (Meth)acrylic acid ester monomer — 2-EHA | - | 81 | 83 | 84 | 82 | - | 80 | - | - | - | | |
| | MAA | 4 | 4 | - | - | - | 4 | - | 4 | 4 | 4 | | |
| | Hydrophilic group-containing monomer — AA | - | - | - | - | 3 | - | - | - | - | - | | |
| | Hydrophilic group-containing monomer — AMPS | - | - | 2 | - | - | - | - | - | - | - | | |
| | Hydrophilic group-containing monomer — 2-HEA | - | - | - | 1 | - | - | - | - | - | - | | |
| | Amount [parts by mass] | 50 | 50 | 50 | 50 | 50 | 50 | 50 | 50 | 50 | 50 | 50 | - |
| Water-soluble polymer | Type | CMC-Na | CMC-Na | CMC-Na | CMC-Na | CMC-Na | CMC-Na | CMC-Na | CMC-Na | CMC-Na | CMC-Na | CMC-Na | CMC-Na |
| | Amount [parts by mass] | 100 | 100 | 100 | 100 | 100 | 100 | 100 | 100 | 100 | 100 | 100 | 100 |
| Evaluation | Smoothness | A | B | B | B | B | A | C | A | A | A | C | D |
| | Adherence strength | A | B | C | C | B | A | C | A | A | A | D | E |
| | High-temperature storage characteristics | B | A | B | B | B | A | C | B | C | C | E | E |

29

It can be seen from Table 1 that in the case of Examples 1-1 to 1-10 in which a positive electrode was produced using a composition for an electrode (conductive material paste) that contained a conductive material, a particulate polymer including a polar group-containing monomer unit (hydrophilic group-containing monomer unit and/or nitrile group-containing monomer unit), a water-soluble polymer, and water, it was possible to form a positive electrode mixed material layer that was smooth and had strong adherence to a current collector, and, as a result, it was possible to obtain a lithium ion secondary battery having excellent high-temperature storage characteristics.

Moreover, it can be seen from Table 1 that in the case of Comparative Example 1-1 in which a positive electrode was produced using a composition for an electrode (conductive material paste) in which a particulate polymer that did not include a polar group-containing monomer unit was used and Comparative Example 1-2 in which a positive electrode was produced using a composition for an electrode (conductive material paste) that did not include a particulate polymer, in particular, it was not possible to ensure close adherence of the positive electrode mixed material layer to the current collector, and high-temperature storage characteristics of the obtained lithium ion secondary battery were reduced.

(Example 2-1)

<Production of particulate polymer>

A reaction vessel equipped with a stirrer was charged with 70 parts of deionized water, 0.2 parts of sodium dodecylbenzenesulfonate as an emulsifier, and 0.3 parts of potassium persulfate as a polymerization initiator. The gas phase of the reaction vessel was purged with nitrogen gas and heating was performed to 60°C. In a separate vessel, a monomer mixture was obtained by mixing 50 parts of deionized water, 0.5 parts of sodium dodecylbenzenesulfonate as an emulsifier, 15 parts of acrylonitrile as a nitrile group-containing monomer, 30 parts of n-butyl acrylate and 42 parts of ethyl acrylate as (meth)acrylic acid ester monomers, 2.0 parts of glycidyl methacrylate as a crosslinkable monomer, 1.0 parts of methacrylic acid as a hydrophilic group-containing monomer, and 10 parts of styrene as an aromatic vinyl monomer. The monomer mixture was continuously added to the reaction vessel over 4 hours to perform polymerization. During addition of the monomer mixture, the reaction was carried out at 60°C. Once the addition of the monomer mixture was completed, further stirring was performed for 3 hours at 70°C to complete the reaction. The polymerization conversion rate was at least 99.5%. The resultant polymerization reaction liquid was cooled to 25°C and was then adjusted to pH 7 through addition of ammonia water. Thereafter, steam was introduced to remove unreacted monomers and obtain a water dispersion of a particulate polymer (solid content concentration: 40%). The volume-average particle diameter of the particulate polymer was 0.2 $\mu$m.

<Production of conductive material paste>

A conductive material paste was obtained by mixing 100 parts of acetylene black (BET specific surface area: 68 $m^2$/g, average particle diameter: 35 nm, density: 0.04 g/$cm^3$) as a conductive material, 50 parts by solid content equivalents of the water dispersion of the particulate polymer described above, and 100 parts by solid content equivalents of an aqueous solution of a sodium salt of carboxymethyl cellulose (average degree of polymerization: 1,000 to 1,200, degree of etherification: 0.65 to 0.75, 1 mass% aqueous solution viscosity (25°C): 1,400 mPa·s) as a water-soluble polymer, and subsequently adding an appropriate amount of water and performing dispersing using a bead mill. The resultant conductive material paste had a solid content concentration of 15 mass%.

<Production of slurry for positive electrode>

A slurry for a positive electrode was produced by adding 100 parts of an active material LiCoO$_2$ having a layered structure (volume-average particle diameter: 10 $\mu$m) as a positive electrode active material and an appropriate amount of water to the conductive material paste (2 parts of conductive material) obtained as described above, and performing stirring using a disper blade (3,000 rpm, 60 minutes). The resultant slurry for a positive electrode had a solid content concentration of 50 mass%.

<Production of positive electrode>

Aluminum foil of 20 $\mu$m in thickness was prepared as a current collector. The slurry for a positive electrode obtained as described above was applied onto the aluminum foil using a comma coater such as to have a coating weight after drying of 20 mg/$cm^2$. The applied slurry for a positive electrode was dried for 20 minutes at 60°C and 20 minutes at 120°C, and was subsequently heat treated for 10 hours at 60°C to obtain a positive electrode web. The positive electrode web was rolled by roll pressing to produce a positive electrode including the aluminum foil and a positive electrode mixed material layer having a density of 3.2 g/$cm^3$. The thickness of the positive electrode was 70 $\mu$m. The

obtained positive electrode was used to evaluate smoothness. The results are shown in Table 2.

<Production of slurry for negative electrode>

A slurry for a negative electrode having good fluidity was obtained in the same way as in Example 1-1.

<Production of negative electrode>

A negative electrode including a negative electrode mixed material layer (thickness: 80 μm) was obtained in the same way as in Example 1-1 using the slurry for a negative electrode.

<Preparation of separator>

A single-layer separator made of polypropylene as in Example 1-1 was cut out as a 5 cm × 5 cm square.

<Production of lithium ion secondary battery>

An aluminum packing case was prepared as a battery case. The positive electrode obtained as described above was cut out as a 4 cm × 4 cm square and was positioned such that a surface at the current collector side of the positive electrode was in contact with the aluminum packing case. The square separator obtained as described above was positioned on the surface of the positive electrode mixed material layer of the positive electrode. The negative electrode obtained as described above was cut out as a 4.2 cm × 4.2 cm square, and the cut-out negative electrode was positioned on the separator such that a surface at the negative electrode mixed material layer side of the negative electrode was facing the separator. The aluminum packing case was filled with a LiPF$_6$ solution of 1.0 M in concentration that contained 1.5% of vinylene carbonate (VC). The solvent of the LiPF$_6$ solution was a mixed solvent of ethylene carbonate (EC) and ethyl methyl carbonate (EMC) (EC/EMC = 3/7 (volume ratio)). The aluminum packing case was then closed by heat sealing at 150°C to tightly seal an opening of the aluminum packing case, and thereby produce a lithium ion secondary battery. The produced lithium ion secondary battery was used to evaluate high-temperature storage characteristics. In addition, the lithium ion secondary battery and the positive electrode described above were used to evaluate the adherence strength retention rate after high-temperature storage. The results are shown in Table 2.

(Examples 2-2 to 2-5)

In each example, a particulate polymer was produced in the same way as in Example 2-1 with the exception that the monomers shown in Table 2 were used in the proportions shown in Table 2. Moreover, a conductive material paste, a slurry for a positive electrode, a positive electrode, a negative electrode, and a lithium ion secondary battery were produced and evaluations were performed in the same way as in Example 2-1 with the exception that this particulate polymer was used. The results are shown in Table 2.

(Comparative Examples 2-1 and 2-2)

A conductive material paste, a slurry for a positive electrode, a positive electrode, a negative electrode, and a lithium ion secondary battery were produced and evaluations were performed in the same way as in Example 2-1 with the exception that polybutyl acrylate (produced in the same way as the particulate polymer in Example 2-1 but using only n-butyl acrylate as a monomer) and polyvinylidene fluoride (KF Polymer #7200 produced by Kureha Corporation) were used as the particulate polymer in Comparative Examples 2-1 and 2-2, respectively. The results are shown in Table 2.
In Table 2, shown below:

  "AcB" indicates acetylene black;
  "AN" indicates acrylonitrile;
  "BA" indicates n-butyl acrylate;
  "EA" indicates ethyl acrylate;
  "GMA" indicates glycidyl methacrylate;
  "AGE" indicates allyl glycidyl ether;
  "MAA" indicates methacrylic acid;
  "ST" indicates styrene;
  "PBA" indicates polybutyl acrylate;
  "PVDF" indicates polyvinylidene fluoride; and

"CMC-Na" indicates sodium salt of carboxymethyl cellulose.

Table 2

| | | | | Example 2-1 | Example 2-2 | Example 2-3 | Example 2-4 | Example 2-5 | Comparative Example 2-1 | Comparative Example 2-2 |
|---|---|---|---|---|---|---|---|---|---|---|
| Conductive material paste | Conductive material | Type | | AcB | AcB | AcB | AcB | AcB | AcB | AcB |
| | | Average particle diameter [mn] | | 35 | 35 | 35 | 35 | 35 | 35 | 35 |
| | | BET specific surface area [m²/g] | | 68 | 68 | 68 | 68 | 68 | 68 | 68 |
| | | Density [g/cm³] | | 0.04 | 0.04 | 0.04 | 0.04 | 0.04 | 0.04 | 0.04 |
| | | Amount [parts by mass] | | 100 | 100 | 100 | 100 | 100 | 100 | 100 |
| | Particulate polymer | Monomer composition [mass%] | Nitrile group-containing monomer / AN | 15 | 5 | 20 | 20 | 15 | PBA | PVDF |
| | | | (Meth)acrylic acid ester monomer / BA | 30 | 50 | 78 | - | 32 | | |
| | | | EA | 42 | 42 | - | 79.5 | 42 | | |
| | | | Crosslinkable monomer / GMA | 2 | 2 | 2 | - | 2 | | |
| | | | AGE | - | - | - | 0.5 | - | | |
| | | | Hydrophilic group-containing monomer / MMA | 1 | 1 | - | - | 1 | | |
| | | | Aromatic vinylmonomer / ST | 10 | - | - | - | 8 | | |
| | | Percentage content ratio [-] (nitrile group-containing monomer unit/(meth)acrylic acid ester monomer unit) | | 15/72 | 5/92 | 20/78 | 20/79.5 | 15/74 | | |
| | | Total percentage content [mass%] (nitrile group-containing monomer unit + (meth) acrylic acid ester monomer unit) | | 87 | 97 | 98 | 99.5 | 89 | | |
| | | Amount [parts by mass] | | 50 | 50 | 50 | 50 | 50 | 50 | 50 |
| | Water-soluble polymer | Type | | CMC-Na | CMC-Na | CMC-Na | CMC-Na | CMC-Na | CMC-Na | CMC-Na |
| | | Amount [parts by mass] | | 100 | 100 | 100 | 100 | 100 | 100 | 100 |

EP 3 316 359 B1

(continued)

|  |  | Example 2-1 | Example 2-2 | Example 2-3 | Example 2-4 | Example 2-5 | Comparative Example 2-1 | Comparative Example 2-2 |
|---|---|---|---|---|---|---|---|---|
| Evaluation | Smoothness | A | B | C | C | A | D | D |
|  | Adherence strength retention rate after high-temperature storage | A | B | B | C | A | E | D |
|  | High-temperature storage characteristics | A | B | B | C | A | E | E |

It can be seen from Table 2 that in the case of Examples 2-1 to 2-5 in which a positive electrode was produced using a composition for an electrode (conductive material paste) that contained a conductive material, a particulate polymer including a polar group-containing monomer unit (hydrophilic group-containing monomer unit and/or nitrile group-containing monomer unit), a water-soluble polymer, and water, it was possible to form a positive electrode mixed material layer that was smooth and had strong adherence to a current collector, and, as a result, it was possible to obtain a lithium ion secondary battery having excellent high-temperature storage characteristics.

Moreover, it can be seen from Table 2 that in the case of Comparative Examples 2-1 and 2-2 in which a positive electrode was produced using a composition for an electrode (conductive material paste) in which a particulate polymer that did not include a polar group-containing monomer unit was used, it was not possible to ensure smoothness of the positive electrode mixed material layer and close adherence of the positive electrode mixed material layer to the current collector, and high-temperature storage characteristics of the obtained lithium ion secondary battery were reduced.

(Example 3-1)

<Production of particulate polymer>

A reaction vessel equipped with a stirrer was charged with 70 parts of deionized water, 0.2 parts of sodium dodecylbenzenesulfonate as an emulsifier, and 0.3 parts of potassium persulfate as a polymerization initiator. The gas phase of the reaction vessel was purged with nitrogen gas and heating was performed to 60°C. In a separate vessel, a monomer mixture was obtained by mixing 50 parts of deionized water, 0.5 parts of sodium dodecylbenzenesulfonate as an emulsifier, 3 parts of methacrylic acid as a hydrophilic group-containing monomer, 15 parts of acrylonitrile as a nitrile group-containing monomer, 80 parts of n-butyl acrylate as a (meth)acrylic acid ester monomer, and 2 parts of glycidyl methacrylate as a crosslinkable monomer. The monomer mixture was continuously added to the reaction vessel over 4 hours to perform polymerization. During addition of the monomer mixture, the reaction was carried out at 60°C. Once the addition of the monomer mixture was completed, further stirring was performed for 3 hours at 70°C to complete the reaction. The polymerization conversion rate was at least 99.5%. The resultant polymerization reaction liquid was cooled to 25°C and was then adjusted to pH 7 through addition of ammonia water. Thereafter, steam was introduced to remove unreacted monomers and obtain a water dispersion of a particulate polymer (solid content concentration: 40%). The particulate polymer had a glass transition temperature of -35°C and a volume-average particle diameter of 0.15 $\mu$m.

<Conductive material paste (for evaluation of dispersed particle diameter and preservation stability)>

A conductive material paste was obtained by mixing 0.2 parts of carbon nanotubes (produced by CNano, product name: FloTube 9110, average diameter: 10 nm, average length: 10 $\mu$m, BET specific surface area: 200 $m^2/g$) as a conductive material, 1 part by solid content equivalents of an aqueous solution of a sodium salt of carboxymethyl cellulose (1 mass% aqueous solution viscosity (25°C): 1,400 mPa·s, degree of etherification: 0.70) as a water-soluble polymer, and 2 parts by solid content equivalents of the water dispersion of the particulate polymer described above, and subsequently adding an appropriate amount of deionized water and performing dispersing using a bead mill. The resultant conductive material paste had a solid content concentration of 15 mass%. The obtained conductive material paste was used to evaluate dispersed particle diameter and preservation stability. The results are shown in Table 3.

<Production of conductive material dispersion liquid>

A conductive material dispersion liquid was obtained by mixing 0.2 parts of carbon nanotubes (produced by CNano, product name: FloTube 9110, average diameter: 10 nm, average length: 10 $\mu$m, BET specific surface area: 200 $m^2/g$) as a conductive material and 1 part by solid content equivalents of an aqueous solution of a sodium salt of carboxymethyl cellulose (1 mass% aqueous solution viscosity (25°C): 1,400 mPa·s, degree of etherification: 0.70) as a water-soluble polymer, and subsequently adding an appropriate amount of deionized water and performing dispersing using a bead mill. The resultant conductive material dispersion liquid had a solid content concentration of 15 mass%.

<Production of slurry for positive electrode>

An appropriate amount of deionized water and 100 parts of an active material (LiCoO$_2$) having a layered structure (volume-average particle diameter: 10 $\mu$m) as a positive electrode active material were added to the conductive material dispersion liquid (0.2 parts of conductive material) obtained as described above and stirring was performed using a disper blade (3,000 rpm, 60 minutes). Thereafter, 2 parts by solid content equivalents of the water dispersion of the particulate polymer described above was added to the resultant mixture and stirring was performed for 10 minutes at 2,000 rpm to yield a slurry for a positive electrode. The resultant slurry for a positive electrode had a solid content concentration of 50 mass%.

<Production of positive electrode>

Aluminum foil of 20 $\mu$m in thickness was prepared as a current collector. The slurry for a positive electrode obtained as described above was applied onto the aluminum foil using a comma coater such as to have a coating weight after drying of 20 mg/cm$^2$. The applied slurry for a positive electrode was dried for 20 minutes at 60°C and 20 minutes at 120°C, and was subsequently heat treated for 10 hours at 60°C to obtain a positive electrode web. The positive electrode web was rolled by roll pressing to produce a positive electrode including the aluminum foil and a positive electrode mixed material layer having a density of 3.2 g/cm$^3$. The thickness of the positive electrode was 70 $\mu$m.

<Production of slurry for negative electrode>

A slurry for a negative electrode having good fluidity was obtained in the same way as in Example 1-1.

<Production of negative electrode>

A negative electrode including a negative electrode mixed material layer (thickness: 80 $\mu$m) was obtained in the same way as in Example 1-1 using the slurry for a negative electrode.

<Preparation of separator>

A single-layer separator made of polypropylene as in Example 1-1 was cut out as a 5 cm $\times$ 5 cm square.

<Production of lithium ion secondary battery>

An aluminum packing case was prepared as a battery case. The positive electrode obtained as described above was cut out as a 4 cm $\times$ 4 cm square and was positioned such that a surface at the current collector side of the positive electrode was in contact with the aluminum packing case. The square separator obtained as described above was positioned on the surface of the positive electrode mixed material layer of the positive electrode. The negative electrode obtained as described above was cut out as a 4.2 cm $\times$ 4.2 cm square, and the cut-out negative electrode was positioned on the separator such that a surface at the negative electrode mixed material layer side of the negative electrode was facing the separator. The aluminum packing case was filled with a LiPF$_6$ solution of 1.0 M in concentration that contained 1.5% of vinylene carbonate (VC). The solvent of the LiPF$_6$ solution was a mixed solvent of ethylene carbonate (EC) and ethyl methyl carbonate (EMC) (EC/EMC = 3/7 (volume ratio)). The aluminum packing case was then closed by heat sealing at 150°C to tightly seal an opening of the aluminum packing case, and thereby produce a lithium ion secondary battery. The produced lithium ion secondary battery was used to evaluate rate characteristics and high-temperature storage characteristics. The results are shown in Table 3.

(Example 3-2)

A particulate polymer, a conductive material paste, a conductive material dispersion liquid, a slurry for a positive electrode, a positive electrode, a negative electrode, and a lithium ion secondary battery were produced and evaluations were performed in the same way as in Example 3-1 with the exception that in production of the conductive material paste and the conductive material dispersion liquid, vapor-grown carbon fiber (produced by Showa Denko K.K., product name: VGCF, average diameter: 100 nm, average length: 15 $\mu$m) was used instead of carbon nanotubes as the conductive material. The results are shown in Table 3.

(Examples 3-3 to 3-5)

In each example, a conductive material paste, a conductive material dispersion liquid, a slurry for a positive electrode, a positive electrode, a negative electrode, and a lithium ion secondary battery were produced and evaluations were performed in the same way as in Example 3-1 with the exception that in production of the conductive material paste and the conductive material dispersion liquid, a sodium salt of carboxymethyl cellulose having the properties shown in Table 3 was used as the water-soluble polymer. The results are shown in Table 3.

(Example 3-6)

A particulate polymer, a conductive material paste, a conductive material dispersion liquid, a slurry for a positive electrode, a positive electrode, a negative electrode, and a lithium ion secondary battery were produced and evaluations were performed in the same way as in Example 3-1 with the exception that a monomer composition shown in Table 3 was used in production of the particulate polymer. The results are shown in Table 3.

(Example 3-7)

A particulate polymer, a conductive material paste, a conductive material dispersion liquid, a slurry for a positive electrode, a positive electrode, a negative electrode, and a lithium ion secondary battery were produced and evaluations were performed in the same way as in Example 3-3 with the exception that a monomer composition shown in Table 3 was used in production of the particulate polymer. The results are shown in Table 3.

(Example 3-8)

A particulate polymer, a positive electrode, a negative electrode, and a lithium ion secondary battery were produced and evaluations were performed in the same way as in Example 3-7 with the exception that a slurry for a positive electrode was produced by single batch mixing as described below. The results are shown in Table 3.

<Production of slurry for positive electrode>

A slurry for a positive electrode was obtained by using a disper blade to stir (3,000 rpm, 60 minutes) 0.2 parts of carbon nanotubes (CNTs, produced by CNano, product name: FloTube 9110, average diameter: 10 nm, average length: 10 $\mu$m, BET specific surface area: 200 m$^2$/g) as a conductive material, 1 part by solid content equivalents of an aqueous solution of a sodium salt of carboxymethyl cellulose (1 mass% aqueous solution viscosity (25°C): 3,500 mPa·s, degree of etherification: 0.65) as a water-soluble polymer, 2 parts by solid content equivalents of the water dispersion of the particulate polymer described above, 100 parts of an active material (LiCoO$_2$) having a layered structure (volume-average particle diameter: 10 $\mu$m) as a positive electrode active material, and an appropriate amount of deionized water. The resultant slurry for a positive electrode had a solid content concentration of 50 mass%.

(Example 3-9)

<Production of particulate polymer>

A vessel Y was charged with 33 parts of 1,3-butadiene as an aliphatic conjugated diene monomer, 63 parts of styrene as an aromatic vinyl monomer, 4 parts of itaconic acid as a hydrophilic group-containing monomer, 0.3 parts of sodium lauryl sulfate as an emulsifier, and 0.3 parts of tert-dodecyl mercaptan to obtain a mixture. Polymerization was initiated by starting addition of this mixture to a pressure vessel Z from the vessel Y and simultaneously starting addition of 1 part of potassium persulfate as a polymerization initiator to the pressure vessel Z. The reaction temperature was maintained at 75°C. Once 4 hours had elapsed from initiation of polymerization, heating was performed to 85°C and the reaction was continued for a further 6 hours. When the polymerization conversion rate reached 97%, the reaction was terminated by cooling to yield a mixture containing a particulate polymer. The mixture containing the particulate polymer was adjusted to pH 8 through addition of 5% sodium hydroxide aqueous solution. Thereafter, unreacted monomers were removed by thermal-vacuum distillation to obtain a water dispersion of the particulate polymer (solid content concentration: 40%). The particulate polymer had a glass transition temperature of 11°C and a volume-average particle diameter of 0.15 $\mu$m.

<Production of conductive material paste>

A conductive material paste was obtained by mixing 0.2 parts of carbon nanotubes (CNTs, produced by CNano, product name: FloTube 9110, average diameter: 10 nm, average length: 10 $\mu$m, BET specific surface area: 200 m$^2$/g) as a conductive material, 1 part by solid content equivalents of an aqueous solution of a sodium salt of carboxymethyl cellulose (1 mass% aqueous solution viscosity (25°C): 2,000 mPa·s, degree of etherification: 0.70), and 2 parts by solid content equivalents of the water dispersion of the particulate polymer described above, and subsequently adding an appropriate amount of deionized water and performing dispersing using a bead mill. The resultant conductive material paste had a solid content concentration of 10 mass%. The obtained conductive material paste was used to evaluate dispersed particle diameter and preservation stability. The results are shown in Table 3.

<Production of slurry for negative electrode>

A planetary mixer equipped with a disper blade was charged with 100 parts of artificial graphite (volume-average particle diameter: 24.5 $\mu$m, specific surface area: 4 m²/g) as a negative electrode active material and the conductive material paste (0.2 parts of conductive material) obtained as described above, and then with deionized water to adjust the solid content concentration to 55%. The contents of the planetary mixer were subsequently mixed for 60 minutes at 25°C. Next, the mixture was adjusted to a solid content concentration of 50% through further addition of deionized water and was then further mixed for 15 minutes at 25°C to yield a mixed liquid. The resultant mixed liquid was subjected to a defoaming process under reduced pressure to yield a slurry for a negative electrode having good fluidity.

<Production of negative electrode>

Copper foil of 20 $\mu$m in thickness was prepared as a current collector. The slurry for a negative electrode obtained as described above was applied onto the copper foil using a comma coater such as to have a thickness after drying of approximately 150 $\mu$m. The slurry for a negative electrode was dried by conveying the copper foil inside a 60°C oven for 2 minutes at a speed of 0.5 m/minute. Heat treatment was subsequently performed for 2 minutes at 120°C to obtain a negative electrode web. The negative electrode web was rolled by roll pressing to obtain a negative electrode including a negative electrode mixed material layer (thickness: 80 $\mu$m).

<Production of slurry for positive electrode>

A mixed liquid was obtained by mixing 100 parts of an active material (LiCoO$_2$) having a layered structure (volume-average particle diameter: 10 $\mu$m) as a positive electrode active material, 2 parts of acetylene black as a conductive material, and 2 parts by solid content equivalents of an NMP solution of PVdF (KF7200 produced by Kureha Corporation) as a binder. The resultant mixed liquid was adjusted to a solid content concentration of 60% through further addition of NMP and was mixed for 60 minutes using a planetary mixer. The solid content concentration was further adjusted to 50% with NMP and then mixing was performed for 10 minutes to yield a slurry for a positive electrode.

<Production of positive electrode>

Aluminum foil of 20 $\mu$m in thickness was prepared as a current collector. The slurry for a positive electrode obtained as described above was applied onto the aluminum foil using a comma coater such as to have a coating weight after drying of 20 mg/cm². The applied slurry for a positive electrode was dried for 20 minutes at 60°C and 20 minutes at 120°C, and was subsequently heat treated for 10 hours at 60°C to obtain a positive electrode web. The positive electrode web was rolled by roll pressing to produce a positive electrode including the aluminum foil and a positive electrode mixed material layer having a density of 3.2 g/cm³. The thickness of the positive electrode was 70 $\mu$m.

<Preparation of separator>

A single-layer separator made of polypropylene as in Example 1-1 was cut out as a 5 cm $\times$ 5 cm square.

<Production of lithium ion secondary battery>

A lithium ion secondary battery was produced in the same way as in Example 3-1 using the negative electrode, the positive electrode, and the separator described above. The produced lithium ion secondary battery was used to evaluate rate characteristics and high-temperature storage characteristics. The results are shown in Table 3.

(Example 3-10)

A particulate polymer, a positive electrode, a negative electrode, and a lithium ion secondary battery were produced, and rate characteristics and high-temperature storage characteristics were evaluated in the same way as in Example 3-9 with the exception that a slurry for a negative electrode was produced by dry pre-mixing of a negative electrode active material and a fibrous carbon nanomaterial as described below. The results are shown in Table 3.

<Production of slurry for negative electrode>

A planetary mixer equipped with a disper blade was charged with 100 parts of artificial graphite (volume-average particle diameter: 24.5 $\mu$m, specific surface area: 4 m²/g) as a negative electrode active material and 0.2 parts of carbon nanotubes (CNTs, produced by CNano, product name: FloTube 9110, average diameter: 10 nm, average length: 10 μm, BET specific surface area: 200 m$^2$/g) as a fibrous carbon nanomaterial, and the contents of the planetary mixer were mixed for 10 minutes. Thereafter, 1 part by solid content equivalents of an aqueous solution of a sodium salt of carboxymethyl cellulose (1 mass% aqueous solution viscosity (25°C): 1,400 mPa·s, degree of etherification: 0.70) was added to the planetary mixer as a water-soluble polymer. The contents of the planetary mixer were adjusted to a solid content concentration of 55% with deionized water and were then mixed for 60 minutes at 25°C. Next, 2 parts by solid content equivalents of the particulate polymer was added and the solid content concentration was adjusted to 50% with deionized water. Further mixing was performed for 15 minutes at 25°C to yield a mixed liquid. The resultant mixed liquid was subjected to a defoaming process under reduced pressure to yield a slurry for a negative electrode having good fluidity.

(Examples 3-11 and 3-12)

In each example, a conductive material paste, a conductive material dispersion liquid, a slurry for a positive electrode, a positive electrode, a negative electrode, and a lithium ion secondary battery were produced and evaluations were performed in the same way as in Example 3-1 with the exception that in production of the conductive material paste and the conductive material dispersion liquid, a sodium salt of carboxymethyl cellulose having the properties shown in Table 3 was used as the water-soluble polymer. The results are shown in Table 3.

(Example 3-13)

A conductive material paste, a conductive material dispersion liquid, a slurry for a positive electrode, a positive electrode, a negative electrode, and a lithium ion secondary battery were produced and evaluations were performed in the same way as in Example 3-7 with the exception that carbon nanotubes having a BET specific surface area of 80 m$^2$/g were used as the conductive material in production of the conductive material paste and the conductive material dispersion liquid. The results are shown in Table 3.

(Example 3-14)

A conductive material paste, a conductive material dispersion liquid, a slurry for a positive electrode, a positive electrode, a negative electrode, and a lithium ion secondary battery were produced and evaluations were performed in the same way as in Example 3-7 with the exception that carbon nanotubes (multi-walled carbon nanotubes) having a BET specific surface area of 450 m$^2$/g were used as the conductive material in production of the conductive material paste and the conductive material dispersion liquid. The results are shown in Table 3.

(Example 3-15)

A conductive material paste, a slurry for a positive electrode, and a positive electrode were produced as described below. Moreover, a lithium ion secondary battery was produced, and rate characteristics and high-temperature storage characteristics were evaluated in the same way as in Example 3-1 with the exception that the obtained positive electrode was used. The results are shown in Table 3.

<Production of conductive material paste>

A conductive material paste was produced in the same way as in Example 3-7. The obtained conductive material paste was used to evaluate dispersed particle diameter and preservation stability. As shown in Table 3, the evaluation results were the same as in Example 3-7.

<Production of slurry for positive electrode>

A mixed liquid was obtained by mixing of 100 parts of an active material (LiCoO$_2$) having a layered structure (volume-average particle diameter: 10 μm) as a positive electrode active material, 2 parts of acetylene black as a conductive material, and 2 parts by solid content equivalents of an NMP solution of PVdF (KF7200 produced by Kureha Corporation) as a binder. The resultant mixed liquid was adjusted to a solid content concentration of 60% through further addition of NMP and was mixed for 60 minutes using a planetary mixer. The solid content concentration was further adjusted to 50% with NMP and then mixing was performed for 10 minutes to yield a slurry for a positive electrode.

<Production of positive electrode>

Aluminum foil of 20 $\mu$m in thickness was prepared as a current collector. The conductive material paste obtained as described above was applied onto the aluminum foil and was dried for 10 minutes at 120°C to form a conductive adhesion layer of 4 $\mu$m in thickness on the current collector.

The slurry for a positive electrode obtained as described above was applied onto the resultant conductive adhesion layer using a comma coater such as to have a coating weight after drying on the aluminum foil of 20 mg/cm$^2$. The applied slurry for a positive electrode was dried for 20 minutes at 60°C and 20 minutes at 120°C, and was subsequently heat treated for 10 hours at 60°C to obtain a positive electrode web. The positive electrode web was rolled by roll pressing to produce a positive electrode including a positive electrode mixed material layer having a density of 3.2 g/cm$^3$, the conductive adhesion layer, and the aluminum foil in this order. The total thickness of the positive electrode mixed material layer and the current collector was 74 $\mu$m.

(Comparative Example 3-1)

A conductive material paste (conductive material dispersion liquid), a slurry for a positive electrode, a positive electrode, a negative electrode, and a lithium ion secondary battery were produced and evaluations were performed in the same way as in Example 3-3 with the exception that a particulate polymer was not used in production of the slurry for a positive electrode. The results are shown in Table 3.

(Comparative Example 3-2)

A conductive material paste was produced, and dispersed particle diameter and preservation stability were evaluated in the same way as in Example 3-1 with the exception that a water-soluble polymer was not used in production of the conductive material paste. The results are shown in Table 3. Moreover, a conductive material dispersion liquid, a slurry for a positive electrode, and a positive electrode were produced in the same way as in Example 3-1 with the exception that a water-soluble polymer was not used in production of the conductive material dispersion liquid, but it was not possible to produce a lithium ion secondary battery because aggregates were formed in a large quantity and a smooth mixed material layer could not be obtained.

In Table 3, shown below:

"LCO" indicates LiCoO$_2$;
"Gr" indicates artificial graphite;
"CNT" indicates carbon nanotubes;
"VGCF" indicates vapor-grown carbon fiber;
"AcB" indicates acetylene black;
"MAA" indicates methacrylic acid;
"AA" indicates acrylic acid;
"IA" indicates itaconic acid;
"AN" indicates acrylonitrile;
"BA" indicates n-butyl acrylate;
"2EHA" indicates 2-ethylhexyl acrylate;
"LA" indicates lauryl acrylate;
"GMA" indicates glycidyl methacrylate;
"ST" indicates styrene; and
"BD" indicates 1,3-butadiene.

+

Table 3

| | Example 3-1 | Example 3-2 | Example 3-3 | Example 3-4 | Example 3-5 | Example 3-6 | Example 3-7 | Example 3-8 | Example 3-9 | Example 3-10 | Example 3-11 | Example 3-12 | Example 3-13 | Example 3-14 | Example 3-15 | Comparative Example 3-1 | Comparative Example 3-2 |
|---|---|---|---|---|---|---|---|---|---|---|---|---|---|---|---|---|---|
| Part produced using composition for electrode | Positive electrode mixed material layer | Positive electrode mixed material layer | Positive electrode mixed material layer | Positive electrode mixed material layer | Positive electrode mixed material layer | Positive electrode mixed material layer | Positive electrode mixed material layer | Positive electrode mixed material layer | Negative electrode mixed material layer | Negative electrode mixed material layer | Positive electrode mixed material layer | Positive electrode mixed material layer | Positive electrode mixed material layer | Positive electrode mixed material layer | Conductive adhesion layer (positive electrode) | Positive electrode mixed material layer | Positive electrode mixed material layer |
| Mixing method in production of slurry for electrode | Sequential mixing | Sequential mixing | Sequential mixing | Sequential mixing | Sequential mixing | Sequential mixing | Sequential mixing | Single batch mixing | Sequential mixing | Dry pre-mixing | Sequential mixing | Sequential mixing | Sequential mixing | Sequential mixing | - | Sequential mixing | Sequential mixing |
| Electrode active material — Type | LCO | LCO | LCO | LCO | LCO | LCO | LCO | LCO | Gr | Gr | LCO | LCO | LCO | LCO | - | LCO | LCO |
| Electrode active material — Amount [parts by mass] | 100 | 100 | 100 | 100 | 100 | 100 | 100 | 100 | 100 | 100 | 100 | 100 | 100 | 100 | - | 100 | 100 |
| Conductive material — Type | CNT | VGCF | CNT | CNT | CNT | CNT | CNT | CNT | CNT | CNT | CNT | CNT | CNT | CNT | CNT | CNT | CNT |
| Conductive material — BET specific surface area [m²/g] | 200 | - | 200 | 200 | 200 | 200 | 200 | 200 | 200 | 200 | 200 | 200 | 80 | 450 | 200 | 200 | 200 |
| Conductive material — Amount [parts by mass 1] | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Water-soluble polymer — 1% aqueous solution viscosity (25°C) [mPa·s] | 1400 | 1400 | 3500 | 2500 | 800 | 1400 | 3500 | 3500 | 2000 | 2000 | 8500 | 150 | 3500 | 3500 | 3500 | 3500 | - |
| Water-soluble polymer — Degree of etherification [-] | 0.70 | 0.70 | 0.65 | 1.2 | 0.50 | 0.70 | 0.65 | 0.65 | 0.70 | 0.70 | 0.80 | 0.70 | 0.65 | 0.65 | 0.65 | 0.65 | |

| | | | | Example 3-1 | Example 3-2 | Example 3-3 | Example 3-4 | Example 3-5 | Example 3-6 | Example 3-7 | Example 3-8 | Example 3-9 | Example 3-10 | Example 3-11 | Example 3-12 | Example 3-13 | Example 3-14 | Example 3-15 | Comparative Example 3-1 | Comparative Example 3-2 |
|---|---|---|---|---|---|---|---|---|---|---|---|---|---|---|---|---|---|---|---|---|
| Composition for electrode | | | Amount [parts by mass 1] | 1 | 1 | 1 | 1 | 1 | 1 | 1 | 1 | 1 | 1 | 1 | 1 | 1 | 1 | 1 | 1 | 1 |
| | Particulate polymer | Monomer composition [mass %] | Hydrophilic group-containing monomer — MAA | 3 | 3 | 3 | 3 | 3 | - | - | - | - | - | 3 | 3 | - | - | - | - | 3 |
| | | | Hydrophilic group-containing monomer — AA | - | - | - | - | - | 3 | - | - | - | - | - | - | - | - | - | - | - |
| | | | Hydrophilic group-containing monomer — LA | - | - | - | - | - | - | 2 | 2 | 4 | 4 | - | - | 2 | 2 | 2 | - | - |
| | | | Nitrile group-containing monomer — AN | 15 | 15 | 15 | 15 | 15 | 27 | 38 | 38 | - | - | 15 | 15 | 38 | 38 | 38 | - | 15 |
| | | | (Meth)acrylic acid ester monomer — BA | 80 | 80 | 80 | 80 | 80 | - | - | - | - | - | 80 | 80 | - | - | - | - | 80 |
| | | | (Meth)acrylic acid ester monomer — 2EHA | - | - | - | - | - | 70 | - | - | - | - | - | - | - | - | - | - | - |
| | | | (Meth)acrylic acid ester monomer — LA | - | - | - | - | - | - | 60 | 60 | - | - | - | - | 60 | 60 | 60 | - | - |
| | | | Crosslinkable monomer — GMA | 2 | 2 | 2 | 2 | 2 | - | - | - | - | - | 2 | 2 | - | - | - | - | 2 |
| | | | Aromatic vinyl monomer — ST | - | - | - | - | - | - | - | - | 63 | 63 | - | - | - | - | - | - | - |

EP 3 316 359 B1

42

| | | | | Exam-ple 3-1 | Exam-ple 3-2 | Exam-ple 3-3 | Exam-ple 3-4 | Exam-ple 3-5 | Exam-ple 3-6 | Exam-ple 3-7 | Ex-am-ple 3-8 | Exam-ple 3-9 | Ex-am-ple 3-10 | Exam-ple 3-11 | Exam-ple 3-12 | Exam-ple 3-13 | Exam-ple 3-14 | Exam-ple 3-15 | Com-parative Exam-ple 3-1 | Com-parative Exam-ple 3-2 |
|---|---|---|---|---|---|---|---|---|---|---|---|---|---|---|---|---|---|---|---|---|
| | | Alipha-tik; con-jugated diene mono-mer | BD | - | - | - | - | - | - | - | - | 33 | 33 | - | - | - | - | - | - | - |
| | Amount [parts by mass 1 | | | 2 | 2 | 2 | 2 | 2 | 2 | 2 | 2 | 2 | 2 | 2 | 2 | 2 | 2 | 2 | - | 2 |
| Evaluation | Dispersed particle diameter | | | A | C | C | B | B | B | C | - | A | - | E | D | D | B | C | B | E |
| | Preservation stability | | | A | C | C | B | B | C | C | - | A | - | D | E | D | B | C | C | E |
| | Rate characteristics | | | A | B | B | B | B | B | B | C | A | C | D | C | C | D | C | D | - |
| | High-temperature storage characteristics | | | A | B | A | B | B | B | B | B | A | C | C | C | C | C | C | E | - |

EP 3 316 359 B1

It can be seen from Table 3 that it was possible to provide a lithium ion secondary battery with excellent high-temperature storage characteristics in Examples 3-1 to 3-8 and 3-11 to 3-14 in which a positive electrode mixed material layer was produced using a composition for an electrode (slurry for an electrode) containing a conductive material, a particulate polymer including a polar group-containing monomer unit (hydrophilic group-containing monomer unit and/or nitrile group-containing monomer unit), a water-soluble polymer, a positive electrode active material, and water, Example 3-15 in which a conductive adhesion layer of a positive electrode was produced using a composition for an electrode (conductive material paste) containing a conductive material, a particulate polymer including a polar group-containing monomer unit, a water-soluble polymer, and water, Example 3-9 in which a negative electrode mixed material layer was produced using a composition for an electrode (conductive material paste) containing a conductive material, a particulate polymer including a polar group-containing monomer unit, a water-soluble polymer, and water, and Example 3-10 in which a negative electrode mixed material layer was produced using a composition for an electrode (slurry for an electrode) containing a conductive material, a particulate polymer including a polar group-containing monomer unit, a water-soluble polymer, a negative electrode active material, and water. Moreover, it can be seen that in Examples 3-1 to 3-7 and 3-9, fibrous carbon nanomaterial (conductive material) dispersibility in the conductive material paste and preservation stability of the conductive material paste were excellent.

On the other hand, compared to Examples 3-1 to 3-8, 3-11, and 3-12, battery characteristics (particularly high-temperature storage characteristics) of a lithium ion secondary battery were reduced in Comparative Example 3-1 in which a positive electrode mixed material layer was produced using a composition for an electrode (slurry for an electrode) that did not contain a particulate polymer. This is presumed to be due to a good conduction path not being formed in the positive electrode mixed material layer and sufficient peel strength not being ensured as a consequence of a particulate polymer not being present as a binder. Moreover, in Comparative Example 3-2 in which a positive electrode mixed material layer was produced using a composition for an electrode (slurry for an electrode) that did not contain a water-soluble polymer, it was not possible to produce a lithium ion secondary battery as previously explained.

INDUSTRIAL APPLICABILITY

According to this disclosure, it is possible to provide a composition for an electrochemical device electrode that enables an electrochemical device to display excellent high-temperature storage characteristics and a method of producing this composition for an electrochemical device electrode.

Moreover, according to this disclosure, it is possible to provide an electrode for an electrochemical device electrode that enables an electrochemical device to display excellent high-temperature storage characteristics and an electrochemical device having excellent high-temperature storage characteristics.

**Claims**

1. A composition for an electrochemical device electrode comprising:

   a conductive material;
   a particulate polymer including a polar group-containing monomer unit;
   a water-soluble polymer; and
   water, wherein
   the polar group-containing monomer unit is at least one selected from the group consisting of a hydrophilic group-containing monomer unit and a nitrile group-containing monomer unit,
   wherein the hydrophilic group-containing monomer unit is selected from the group consisting of a carboxylic acid group-containing monomer unit, a hydroxyl group-containing monomer unit, a sulfonate group-containing monomer unit, and a phosphate group-containing monomer unit;
   **characterized in that** the composition is a conductive material paste for an electrochemical device electrode which does not contain an electrode active material.

2. The composition for an electrochemical device electrode according to claim 1, wherein
   the conductive material has a BET specific surface area of at least 30 $m^2/g$ and not more than 1,000 $m^2/g$, wherein the "BET specific surface area" refers to the nitrogen adsorption specific surface area measured by the BET method and is measured in accordance with ASTM D3037-81.

3. The composition for an electrochemical device electrode according to claim 1 or 2, wherein
   the conductive material is a fibrous carbon nanomaterial.

**4.** The composition for an electrochemical device electrode according to any one of claims 1 to 3, wherein the water-soluble polymer has a 1 mass% aqueous solution viscosity at 25°C of at least 500 mPa·s and not more than 8,000 mPa·s, measured by preparing an aqueous solution of the water-soluble polymer having a concentration of 1 mass% and measuring the viscosity of this aqueous solution using a B-type viscometer under conditions of a temperature of 25°C and a rotor rotation speed of 60 rpm.

**5.** The composition for an electrochemical device electrode according to any one of claims 1 to 4, wherein the water-soluble polymer is a thickening polysaccharide.

**6.** The composition for an electrochemical device electrode according to claim 5, wherein the thickening polysaccharide is a cellulosic semi-synthetic polymer compound, wherein the cellulosic semi-synthetic polymer compound is at least one of

(i) a non-ionic cellulosic semi-synthetic polymer compound selected from the group consisting of methyl cellulose, methyl ethyl cellulose, ethyl cellulose, microcrystalline cellulose, hydroxyethyl cellulose, hydroxybutyl methylcellulose, hydroxypropyl cellulose, hydroxypropyl methylcellulose, hydroxyethyl methylcellulose, hydroxypropyl methylcellulose stearoxy ether, carboxymethyl hydroxyethyl cellulose, alkyl hydroxyethyl cellulose, and nonoxynyl hydroxyethyl cellulose;
(ii) an anionic cellulosic semi-synthetic polymer compound selected from the group consisting of sodium cellulose sulfate, salts of methyl cellulose, salts of methyl ethyl cellulose, salts of ethyl cellulose, carboxymethyl cellulose, and salts of carboxymethyl cellulose; and
(iii) a cationic cellulosic semi-synthetic polymer compound selected from the group consisting of low nitrogen hydroxyethyl cellulose dimethyldiallyl ammonium chloride, O-[2-hydroxy-3-(trimethylammonio)propyl]hydroxyethyl cellulose chloride, and O-[2-hydroxy-3-(lauryldimethylammonio)propyl]hydroxyethyl cellulose chloride.

**7.** The composition for an electrochemical device electrode according to claim 6, wherein the cellulosic semi-synthetic polymer compound has a degree of etherification of at least 0.5 and not more than 1.0, wherein the degree of etherification is a value determined by the respective method specified in the description.

**8.** The composition for an electrochemical device electrode according to any one of claims 1 to 7, wherein the polar group-containing monomer unit includes a hydrophilic group-containing monomer unit.

**9.** The composition for an electrochemical device electrode according to claim 8, wherein the hydrophilic group-containing monomer unit has a percentage content of at least 0.5 mass% and not more than 40 mass% in the particulate polymer.

**10.** The composition for an electrochemical device electrode according to claim 8 or 9, wherein the hydrophilic group-containing monomer unit is a carboxylic acid group-containing monomer unit.

**11.** The composition for an electrochemical device electrode according to any one of claims 1 to 10, wherein the polar group-containing monomer unit includes a nitrile group-containing monomer unit.

**12.** The composition for an electrochemical device electrode according to claim 11, wherein the particulate polymer further includes a (meth)acrylic acid ester monomer unit.

**13.** The composition for an electrochemical device electrode according to claim 12, wherein a mass ratio of percentage content of the nitrile group-containing monomer unit relative to percentage content of the (meth)acrylic acid ester monomer unit in the particulate polymer is at least 1/20 and not more than 1.

**14.** The composition for an electrochemical device electrode according to claim 12 or 13, wherein the nitrile group-containing monomer unit and the (meth)acrylic acid ester monomer unit have a total percentage content of 50 mass% or more in the particulate polymer.

**15.** The composition for an electrochemical device electrode according to any one of claims 1 to 14, wherein the particulate polymer further includes a crosslinkable monomer unit.

**16.** The composition for an electrochemical device electrode according to claim 15, wherein the crosslinkable monomer unit is at least one selected from the group consisting of an epoxy group-containing monomer unit, an N-methylol amide group-containing monomer unit, and an oxazoline group-containing monomer unit.

17. The composition for an electrochemical device electrode according to any one of claims 1 to 16, wherein the particulate polymer is contained in an amount of at least 5 parts by mass and not more than 10,000 parts by mass per 100 parts by mass of the conductive material.

18. The composition for an electrochemical device electrode according to any one of claims 1 to 17, wherein the water-soluble polymer is contained in an amount of at least 10 parts by mass and not more than 4,000 parts by mass per 100 parts by mass of the conductive material.


**Patentansprüche**

1. Eine Zusammensetzung für eine Elektrode in einer elektrochemischen Vorrichtung, umfassend:

ein leitfähiges Material;
ein partikelförmiges Polymer, umfassend eine Monomereinheit mit einer polaren Gruppe;
ein wasserlösliches Polymer; und
Wasser, wobei
die Monomereinheit mit einer polaren Gruppe mindestens eine Einheit ausgewählt aus der Gruppe bestehend aus einer Monomereinheit mit einer hydrophilen Gruppe und einer Monomereinheit mit einer Nitrilgruppe, wobei die Monomereinheit mit einer hydrophilen Gruppe ausgewählt ist aus der Gruppe bestehend aus einer Monomereinheit mit einer Carbonsäuregruppe, einer Monomereinheit mit einer Hydroxylgruppe, einer Monomereinheit mit einer Sulfonatgruppe, und einer Monomereinheit mit einer Phosphatgruppe;
**dadurch gekennzeichnet, dass** die Zusammensetzung eine Paste aus leitfähigem Material für eine Elektrode in einer elektrochemischen Vorrichtung ist, welche kein elektrodenaktives Material enthält.

2. Die Zusammensetzung für eine Elektrode in einer elektrochemischen Vorrichtung gemäß Anspruch 1, worin das leitfähige Material eines spezifische BET-Oberfläche von mindestens 30 $m^2/g$ und höchstens 1000 $m^2/g$ hat, wobei die "spezifische BET-Oberfläche" sich auf die spezifisch Stickstoff adsorbierende Oberfläche bezieht, gemessen mit der BET-Methode gemäß ASTM D3037-81.

3. Die Zusammensetzung für eine Elektrode in einer elektrochemischen Vorrichtung gemäß Anspruch 1 oder 2, worin das leitfähige Material ein faserförmiges Kohlenstoff-Nanomaterial ist.

4. Die Zusammensetzung für eine Elektrode in einer elektrochemischen Vorrichtung gemäß irgendeinem der Ansprüche 1 bis 3, worin
das wasserlösliche Polymer als 1%ige wässrige Lösung eine Viskosität bei 25°C von mindestens 500 mPa·s und höchstens 8000 mPa·s hat, gemessen durch Herstellung einer wässrigen Lösung des wasserlöslichen Polymers mit einer Konzentration von 1 Gew.% und Messen der Viskosität der wässrigen Lösung mit einem B-Typ-Viskometer bei einer Temperatur von 25°C und einer Rotorgeschwindigkeit von 60 rpm.

5. Die Zusammensetzung für eine Elektrode in einer elektrochemischen Vorrichtung gemäß irgendeinem der Ansprüche 1 bis 4, worin
das wasserlösliche Polymer ein verdickendes Polysaccharid ist.

6. Die Zusammensetzung für eine Elektrode in einer elektrochemischen Vorrichtung gemäß Anspruch 5, worin das verdickende Polysaccharid eine semisynthetische Cellulose-Polymerverbindung ist, wobei die semisynthetische Cellulose-Polymerverbindung mindestens eines von

(i) einer nichtionischen semisynthetischen Cellulose-Polymerverbindung ausgewählt aus der Gruppe bestehend aus Methylcellulose, Methylethylcellulose, Ethylcellulose, mikrokristalliner Cellulose, Hydroxyethylcellulose, Hydroxybutylmethylcellulose, Hydroxypropylcellulose, Hydroxypropylmethylcellulose, Hydroxyethylmethylcellulose, Hydroxypropylmethylcellulose-Stearoxyether, Carboxymethylhydroxyethylcellulose, Alkylhydroxyethylcellulose, und Nonoxynylhydroxyethylcellulose;
(ii) einer anionischen semisynthetischen Cellulose-Polymerverbindung ausgewählt aus der Gruppe bestehend aus Natriumcellulosesulfat, Salzen von Methylcellulose, Salzen von Methylethylcellulose, Salzen von Ethylcellulose, Carboxymethylcellulose, und Salzen von Carboxymethylcellulose; und

(iii) einer kationischen semisynthetischen Cellulose-Polymerverbindung ausgewählt aus der Gruppe bestehend aus Niedrigstickstoff-Hydroxyethylcellulose-Dimethyldiallylammoniumchlorid, O-[2-Hydroxy-3-(trimethylammonio)propyl]hydroxyethylcellulosechlorid, und O-[2-Hydroxy-3-(lauryldimethylammonio)propyl]hydroxyethyl-cellulosechlorid

ist.

7.  Die Zusammensetzung für eine Elektrode in einer elektrochemischen Vorrichtung gemäß Anspruch 6, worin die semisynthetische Cellulose-Polymerverbindung einen Veretherungsgrad von mindestens 0,5 und höchstens 1,0 hat, wobei der Veretherungsgrad ein Wert ist, der mit der entsprechenden in der Beschreibung beschriebenen Methode ermittelt wird.

8.  Die Zusammensetzung für eine Elektrode in einer elektrochemischen Vorrichtung gemäß irgendeinem der Ansprüche 1 bis 7, wobei

die Monomereinheit mit einer polaren Gruppe eine Monomereinheit mit einer hydrophilen Gruppe einschließt.

9.  Die Zusammensetzung für eine Elektrode in einer elektrochemischen Vorrichtung gemäß Anspruch 8, worin die Monomereinheit mit einer hydrophilen Gruppe einen prozentualen Anteil von mindestens 0,5 Gew.% und höchstens 40 Gew.% am partikelförmigen Polymer hat.

10. Die Zusammensetzung für eine Elektrode in einer elektrochemischen Vorrichtung gemäß Anspruch 8 oder 9, wobei die Monomereinheit mit einer hydrophilen Gruppe eine Carbonsäuregruppen-haltige Monomereinheit ist.

11. Die Zusammensetzung für eine Elektrode in einer elektrochemischen Vorrichtung gemäß irgendeinem der Ansprüche 1 bis 10, wobei

die Monomereinheit mit einer polaren Gruppe eine Nitrilgruppen-haltige Monomereinheit einschließt.

12. Die Zusammensetzung für eine Elektrode in einer elektrochemischen Vorrichtung gemäß Anspruch 11, worin das partikelförmige Polymer des Weiteren eine (Meth)acrylatester-Monomereinheit umfasst.

13. Die Zusammensetzung für eine Elektrode in einer elektrochemischen Vorrichtung gemäß Anspruch 12, worin das Gewichtsverhältnis des prozentualen Anteils der Nitrilgruppenhaltigen Monomereinheit relativ zum prozentualen Anteil der (Meth)acrylatester-Monomereinheit im partikelförmigen Polymer mindestens 1/20 und höchstens 1 beträgt.

14. Die Zusammensetzung für eine Elektrode in einer elektrochemischen Vorrichtung gemäß Anspruch 12 oder 13, worin die Nitrilgruppen-haltige Monomereinheit und die (Meth)acrylatester-Monomereinheit einen prozentualen Gesamtanteil von 50 Gew.% oder mehr im partikelförmigen Polymer ausmachen.

15. Die Zusammensetzung für eine Elektrode in einer elektrochemischen Vorrichtung gemäß irgendeinem der Ansprüche 1 bis 14, worin

das partikelförmige Polymer des Weiteren eine quervernetzbare Monomereinheit umfasst.

16. Die Zusammensetzung für eine Elektrode in einer elektrochemischen Vorrichtung gemäß Anspruch 15, wobei die quervernetzbare Monomereinheit mindestens eine Einheit ausgewählt aus der Gruppe bestehend aus einer Epoxidgruppen-haltige Monomereinheit, einer N-Methylolamidgruppen-haltigen Monomereinheit, und einer Oxazolingruppen-haltigen Monomereinheit ist.

17. Die Zusammensetzung für eine Elektrode in einer elektrochemischen Vorrichtung gemäß irgendeinem der Ansprüche 1 bis 16, worin

das partikelförmige Polymer in einer Menge von mindestens 5 Gewichtsteilen und höchstens 10000 Gewichtsteilen pro 100 Gewichtsteilen des leitfähigen Materials enthalten ist.

18. Die Zusammensetzung für eine Elektrode in einer elektrochemischen Vorrichtung gemäß irgendeinem der Ansprüche 1 bis 17, worin

das wasserlösliche Polymer in einer Menge von mindestens 10 Gewichtsteilen und höchstens 4000 Gewichtsteilen pro 100 Gewichtsteilen des leitfähigen Materials enthalten ist.

# EP 3 316 359 B1

## Revendications

1. Composition pour une électrode de dispositif électrochimique comprenant :

   un matériau conducteur ;
   un polymère particulaire comprenant un motif monomère contenant un groupe polaire ;
   un polymère soluble dans l'eau ; et
   de l'eau, dans laquelle
   le motif monomère contenant un groupe polaire est au moins un motif choisi dans le groupe constitué par un motif monomère contenant un groupe hydrophile et un motif monomère contenant un groupe nitrile,
   dans laquelle le motif monomère contenant un groupe hydrophile est choisi dans le groupe constitué par un motif monomère contenant un groupe acide carboxylique, un motif monomère contenant un groupe hydroxyle, un motif monomère contenant un groupe sulfonate et un motif monomère contenant un groupe phosphate ; **caractérisée en ce que** la composition est une pâte de matériau conducteur pour une électrode de dispositif électrochimique qui ne contient pas de matériau actif pour l'électrode.

2. Composition pour une électrode de dispositif électrochimique selon la revendication 1, dans laquelle le matériau conducteur a une surface spécifique BET d'au moins 30 m$^2$/g et de pas plus de 1 000 m$^2$/g, dans laquelle la « surface spécifique BET » fait référence à une surface spécifique d'absorption d'azote mesurée par la méthode BET et est mesurée selon la norme ASTM D3037-81.

3. Composition pour une électrode de dispositif électrochimique selon la revendication 1 ou 2, dans laquelle le matériau conducteur est un nanomatériau de carbone fibreux.

4. Composition pour une électrode de dispositif électrochimique selon l'une quelconque des revendications 1 à 3, dans laquelle
   le polymère soluble dans l'eau a une viscosité en solution aqueuse à 1% en masse à 25 °C d'au moins 500 mPa.s et de pas plus de 8 000 mPa.s, mesurée en préparant une solution aqueuse du polymère soluble dans l'eau ayant une concentration de 1% en masse et en mesurant la viscosité de cette solution aqueuse en utilisant un viscosimètre de type B dans des conditions d'une température de 25 °C et d'une vitesse de rotation du rotor de 60 tr/min.

5. Composition pour une électrode de dispositif électrochimique selon l'une quelconque des revendications 1 à 4, dans laquelle
   le polymère soluble dans l'eau est un polysaccharide épaississant.

6. Composition pour une électrode de dispositif électrochimique selon la revendication 5, dans laquelle le polysaccharide épaississant est un composé polymère semi-synthétique cellulosique, dans laquelle le composé polymère semi-synthétique cellulosique est au moins l'un parmi

   (i) un composé polymère semi-synthétique cellulosique non ionique choisi dans le groupe constitué par la méthylcellulose, la méthyléthylcellulose, l'éthylcellulose, la cellulose microcristalline, l'hydroxyéthylcellulose, l'hydroxybutylméthylcellulose, l'hydroxypropylcellulose, l'hydroxypropylméthylcellulose, l'hydroxyéthylméthylcellulose, le stéaroxyéther d'hydroxypropylméthylcellulose, la carboxyméthylhydroxyéthylcellulose, une alkylhydroxyéthylcellulose et la nonoxynylhydroxyéthylcellulose ;
   (ii) un composé polymère semi-synthétique cellulosique anionique choisi dans le groupe constitué par le sulfate de cellulose sodique, les sels de méthylcellulose, les sels de méthyléthylcellulose, les sels d'éthylcellulose, la carboxyméthylcellulose et les sels de carboxyméthylcellulose ; et
   (iii) un composé polymère semi-synthétique cellulosique cationique choisi dans le groupe constitué par le chlorure de diméthyldiallylammonium d'hydroxyéthylcellulose à faible teneur en azote, le chlorure de O-[2-hydroxy-3-(triméthylammonio)propyl]hydroxyéthylcellulose et le chlorure de O-[2-hydroxy-3-(lauryldiméthylammonio)propyl] hydroxyéthylcellulose.

7. Composition pour une électrode de dispositif électrochimique selon la revendication 6, dans laquelle le composé polymère semi-synthétique cellulosique a un degré d'éthérification d'au moins 0,5 et de pas plus de 1,0, dans laquelle le degré d'éthérification est une valeur déterminée par la méthode correspondante spécifiée dans la description.

8. Composition pour une électrode de dispositif électrochimique selon l'une quelconque des revendications 1 à 7, dans laquelle
le motif monomère contenant un groupe polaire comprend un motif monomère contenant un groupe hydrophile.

9. Composition pour une électrode de dispositif électrochimique selon la revendication 8, dans laquelle
le motif monomère contenant un groupe hydrophile a une teneur en pourcentage d'au moins 0,5 % en masse et de pas plus de 40 % en masse dans le polymère particulaire.

10. Composition pour une électrode de dispositif électrochimique selon la revendication 8 ou 9, dans laquelle
le motif monomère contenant un groupe hydrophile est un motif monomère contenant un groupe acide carboxylique.

11. Composition pour une électrode de dispositif électrochimique selon l'une quelconque des revendications 1 à 10, dans laquelle
le motif monomère contenant un groupe polaire comprend un motif monomère contenant un groupe nitrile.

12. Composition pour une électrode de dispositif électrochimique selon la revendication 11, dans laquelle
le polymère particulaire comprend en outre un motif monomère d'ester d'acide (méth)acrylique.

13. Composition pour une électrode de dispositif électrochimique selon la revendication 12, dans laquelle
un rapport massique de la teneur en pourcentage du motif monomère contenant un groupe nitrile par rapport à la teneur en pourcentage du motif monomère ester d'acide (méth)acrylique dans le polymère particulaire est d'au moins 1/20 et de pas plus de 1.

14. Composition pour une électrode de dispositif électrochimique selon la revendication 12 ou 13, dans laquelle
le motif monomère contenant un groupe nitrile et le motif monomère ester d'acide (méth)acrylique ont une teneur totale en pourcentage de 50 % en masse ou plus dans le polymère particulaire.

15. Composition pour une électrode de dispositif électrochimique selon l'une quelconque des revendications 1 à 14, dans laquelle
le polymère particulaire comprend en outre un motif monomère réticulable.

16. Composition pour une électrode de dispositif électrochimique selon la revendication 15, dans laquelle
le motif monomère réticulable est au moins un motif choisi dans le groupe constitué par un motif monomère contenant un groupe époxy, un motif monomère contenant un groupe N-méthylolamide et un motif monomère contenant un groupe oxazoline.

17. Composition pour une électrode de dispositif électrochimique selon l'une quelconque des revendications 1 à 16, dans laquelle
le polymère particulaire est contenu en une quantité d'au moins 5 parties en masse et de pas plus de 10 000 parties en masse pour 100 parties en masse du matériau conducteur.

18. Composition pour une électrode de dispositif électrochimique selon l'une quelconque des revendications 1 à 17, dans laquelle
le polymère soluble dans l'eau est contenu en une quantité d'au moins 10 parties en masse et de pas plus de 4 000 parties en masse pour 100 parties en masse du matériau conducteur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006134777 A
- WO 2011148970 A1
- JP 2012238489 A
- WO 2014119790 A1
- US 2015357648 A1
- JP 2014165108 A
- JP 2013069672 A
- JP 2013093123 A
- JP 2013206759 A
- JP 2013211161 A
- JP 2015023015 A
- JP 5434598 B
- JP 2012204303 A